(19) Europäisches Patentamt

European Patent Office

Office européen des brevets

(11) **EP 1 408 202 A2**

(12) **DEMANDE DE BREVET EUROPEEN**

(43) Date de publication:
**14.04.2004 Bulletin 2004/16**

(51) Int Cl.⁷: **F01L 9/04**

(21) Numéro de dépôt: **03300071.2**

(22) Date de dépôt: **21.07.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **26.07.2002 FR 0209549**

(71) Demandeur: **Peugeot Citroen Automobiles SA 92200 Neuilly sur Seine (FR)**

(72) Inventeur: **Bernier, Loic 92250, LA GARENNE COLOMBES (FR)**

(74) Mandataire: **Grynwald, Albert Cabinet Grynwald, 127, rue du Faubourg Poissonnière 75009 Paris (FR)**

(54) **Moteur à combustion interne muni d'un processeur et de cylindres dont chacun comporte au moins deux soupapes d'admission à commande électromécanique**

(57) L'invention concerne un moteur à combustion interne comprenant un processeur (30) et des cylindres comportant au moins deux soupapes d'admission commandées au moyen d'actionneurs électromécaniques.

Conformément à l'invention, un tel moteur est caractérisé en ce que le processeur (30) comprend des moyens (34) pour recevoir des informations (R, $C_{brut}$, G, T, Q) relatives au fonctionnement du moteur et des informations (C.V.) relatives à la conduite du véhicule, et des moyens (38) pour commander des actionneurs de façon à modifier le nombre et/ou le type de soupapes d'admission actives par cylindre, une soupape désactivée étant maintenue dans une position fermée.

FIG.2

## Description

La présente invention se rapporte à un moteur à combustion interne muni d'un processeur et d'actionneurs électromécaniques de commande de soupapes.

On sait que dans un moteur à combustion interne chacun de ses cylindres fonctionne selon un cycle prédéterminé pour fournir un couple moteur. Par exemple, un cylindre dit "à quatre temps" effectue un cycle comprenant une étape d'admission d'un mélange combustible dans une chambre de combustion, une étape de compression de ce mélange jusqu'à sa combustion, une étape de détente des gaz de combustion et une étape d'échappement de ces gaz de la chambre.

Au cours d'un cycle, les échanges de gaz entre l'intérieur et l'extérieur de la chambre de combustion sont contrôlés par des soupapes d'admission ou d'échappement, de telles soupapes étant dites "ouvertes" ("fermées") lorsqu'elles permettent (empêchent) des échanges de gaz entre l'intérieur et l'extérieur de la chambre de combustion.

L'ouverture ou la fermeture d'une soupape est déterminée par le fonctionnement du cylindre. Ainsi, lors d'une étape d'admission, la(les) soupape(s) d'admission est (sont) ouverte(s), les soupapes d'admission et d'échappement sont fermées lors des étapes de compression et de détente tandis que, lors de l'étape d'échappement, la(les) soupape(s) d'échappement est (sont) ouverte(s).

Les positions ouvertes ou fermées des soupapes sont commandées soit de façon mécanique, soit de façon électromécanique comme décrit ci-dessous :

Dans le premier cas (commande mécanique) la soupape est mécaniquement solidaire du piston et sa position est fonction de la position du piston dans la chambre de combustion.

Dans le second cas, auquel s'applique l'invention, la soupape est commandée par un dispositif ou actionneur électromécanique comprenant par exemple des ressorts combinés à des électroaimants pour contrôler l'ouverture ou la fermeture de cette soupape.

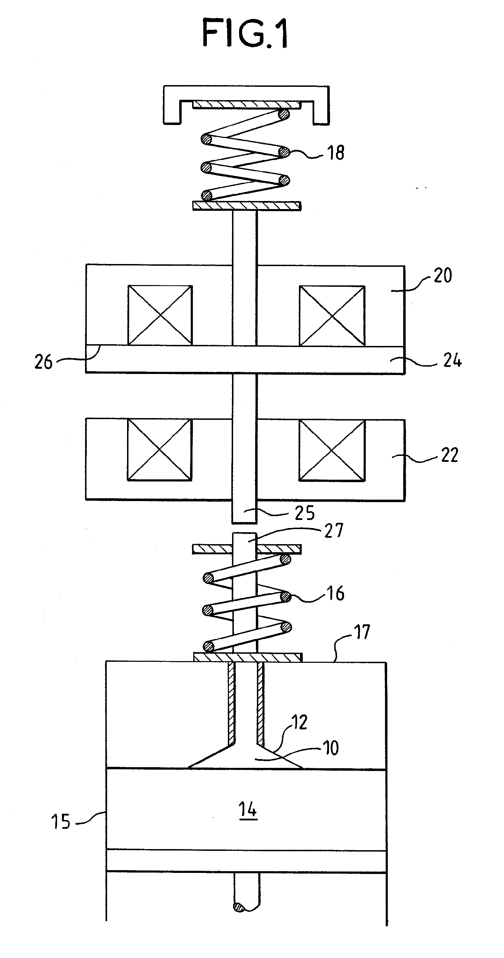

La figure 1 représente un tel actionneur commandant une soupape 10 représentée en position fermée, c'est-à-dire appliquée contre son siège 12. Dans cette position, l'intérieur 14 de la chambre de combustion du cylindre 15 est isolé de l'extérieur 17 de ce cylindre.

La soupape 10 est maintenue fermée ou ouverte grâce à l'actionneur électromécanique comprenant des ressorts 16 et 18 et des électroaimants 20 et 22. L'électroaimant 20, le plus éloigné de la chambre de combustion, est destiné à attirer un plateau 24 pour l'appliquer contre une face 26 du circuit magnétique de cet électroaimant 20. La soupape 10 est alors fermée par l'action du ressort 16 sur la tige 27.

Le second électroaimant 22 permet de commander la soupape 10 en position ouverte. A cet effet, la bobine de cet électroaimant 22 est activée après désactivation de la bobine de l'électroaimant 20. Le plateau 24 se sépare alors de la face 26 du circuit magnétique de l'électroaimant 20, cette séparation étant facilitée par l'action du ressort 18. Quand l'électroaimant 22 est activé, il attire le plateau 24 vers une face de son circuit magnétique. Cette attraction étant supérieure à l'action du ressort 16, il ouvre la soupape 10 par l'action d'une tige 25, solidaire du plateau 24, sur la tige 27 de la soupape 10.

Par ailleurs, lorsqu'un moteur est équipé de cylindres comprenant une pluralité de soupapes d'admission pouvant être commandées individuellement, on peut sélectivement maintenir fermées une ou plusieurs de ces soupapes d'admission pour commander un mode de fonctionnement du moteur. Par exemple, lorsque ces cylindres sont équipés de deux soupapes d'admission, on peut utiliser ou activer une ou deux soupapes d'admission par cylindre, le moteur fonctionnant alors suivant un mode dit à une ou à deux soupapes d'admission par cylindre.

En outre, si des soupapes d'admission effectuent différentes fonctions telles que le contrôle d'une admission d'air ou le contrôle d'une admission d'air et de carburant, on peut sélectivement maintenir fermées les soupapes effectuant un type d'admission.

La présente invention résulte de la constatation que des paramètres extérieurs au fonctionnement du moteur, relatifs à un mode de conduite du véhicule, doivent être considérés pour commander le nombre et/ou le type de soupapes maintenues actives dans un cylindre. Par exemple, il convient de maintenir actives l'ensemble des soupapes d'admission d'un moteur lorsqu'une conduite sportive, comportant de fortes accélérations, est pratiquée de façon à admettre dans le cylindre une quantité maximale de mélange combustible dans le cylindre et obtenir ainsi des accélérations rapides. Inversement, lorsque de faibles accélérations sont requises, il convient d'utiliser un nombre réduit de soupapes d'admission par cylindre de façon à privilégier une économie de carburant.

C'est pourquoi, la présente invention concerne un moteur à combustion interne comportant un processeur et des cylindres comportant au moins deux soupapes d'admission commandées au moyen d'actionneurs électromécaniques, caractérisé en ce que le processeur comprend des moyens pour recevoir des informations relatives au fonctionnement du moteur et des informations relatives à la conduite du véhicule, et des moyens pour commander des actionneurs de façon à modifier le nombre et/ou le type de soupapes d'admission actives par cylindre, une soupape désactivée étant maintenue dans une position fermée.

Ainsi, le processeur contrôlant le nombre et/ou le type de soupapes d'admission actives par cylindre au moyen d'actionneurs électromécaniques peut prendre en compte les informations relatives au moteur et à la conduite du véhicule pour effectuer ce contrôle.

Par ailleurs, des stratégies de désactivation et de transition entre les différents modes de fonctionnement peuvent être développées et appliquées par simple programmation du processeur de façon à prévenir d'éventuels dysfonctionnements du moteur lors des changements de mode. Cette programmation peut être modifiée par chargement de nouveaux programmes.

Selon une réalisation, le processeur comporte des moyens pour recevoir des informations concernant le moteur qui sont relatives à au moins un des paramètres suivants: le régime du moteur, le couple commandé au moteur, la température du liquide de refroidissement, la composition et/ou la température des gaz d'échappement, l'embrayage d'une vitesse, et/ou la quantité de carburant injectée dans les cylindres.

Le processeur peut aussi comporter des moyens pour recevoir des informations concernant la conduite du véhicule qui sont relatives à au moins un des paramètres suivants: la vitesse du véhicule, la trajectoire du véhicule, un type de conduite du véhicule.

Le processeur comprend, dans un exemple, des moyens pour modifier le couple commandé ($C_{brut}$) par le conducteur du véhicule en un couple ($C_{filtre}$) filtré atténuant les variations de ce couple commandé ($C_{brut}$) et pour déterminer le nombre et/ou le type de soupapes d'admission actives par cylindre en fonction de ce couple filtré.

Lorsque le moteur est tel que chaque cylindre comporte au moins une soupape contrôlant une admission d'un mélange d'air et de carburant et au moins une soupape contrôlant une admission d'air, le processeur comporte, dans un exemple, des moyens pour commander au moins deux des modes suivants: un mode activant toutes les soupapes d'admission, un mode activant uniquement la (ou les) soupape(s) contrôlant une admission de carburant, un mode activant uniquement la (ou les) soupape(s) contrôlant une admission d'air, un mode désactivant toutes les soupapes d'admission.

Selon une réalisation, le processeur comporte des moyens pour activer et/ou désactiver, lors d'un changement de mode du nombre et/ou type de soupapes actives par cylindre, les soupapes d'admission de chaque cylindre considéré successivement. Dans ce cas, et lorsque le moteur comporte deux paires de cylindres fonctionnant suivant un cycle à quatre temps, un premier cylindre d'une paire étant décalé d'un demi cycle vis-à-vis du deuxième cylindre de cette paire, le processeur peut comporter des moyens pour commander successivement un changement de mode du nombre et/ou type de soupapes d'admission actives à un premier cylindre d'une première paire, au deuxième cylindre de cette première paire, à un premier cylindre d'une deuxième paire puis à un deuxième cylindre de la deuxième paire.

Selon une réalisation, le processeur comporte des moyens pour déterminer un mode de fonctionnement relatif au mode de levée des soupapes actives. Dans ce cas, dans un exemple, le processeur comporte des moyens pour utiliser un mode de levée des soupapes d'admission classique, comportant une commande d'ouverture et une commande de fermeture des soupapes, ou un mode de levée balistique, comportant une unique commande d'ouverture ou de fermeture de la soupape d'admission.

Selon un mode de réalisation, le processeur comporte des moyens pour que le changement d'un mode à un autre mode s'effectue lorsque le couple ($C_{filtre}$) filtré atteint un couple de test ($C_{40}''$ (min), $C_{40}'$ (min) $C_{40}''$ (max); $C_{40}'$ (max)) et que la variation ($\Delta C_{brut}$) de couple ($C_{brut}$) commandée est supérieure à un seuil maximal positif ($DC_{max}$; $DC'_{max}$) de variation lorsque la variation est positive, ou inférieure à un seuil minimal négatif de variation ($DC''_{min}$) lorsque la variation est négative. Dans ce cas, le processeur peut comporter des moyens pour commander le mode classique sans transition à partir d'un mode balistique.

Lorsque le moteur comporte deux paires de cylindres fonctionnant suivant un cycle à quatre temps, un premier cylindre d'une paire étant décalé d'un demi cycle vis-à-vis du deuxième cylindre de cette paire, le processeur comporte, selon une réalisation, des moyens pour commander successivement le mode balistique à partir d'un mode classique à des soupapes d'un premier cylindre d'une première paire, à des soupapes du deuxième cylindre de cette première paire, à des soupapes d'un premier cylindre d'une deuxième paire et à des soupapes du deuxième cylindre de la deuxième paire.

D'autres caractéristiques et avantages de l'invention apparaîtront avec la description effectuée ci-dessous, à titre descriptif et non limitatif, en se référant aux figures suivantes :

la figure 1, déjà décrite, représente un actionneur électromécanique à électroaimants de commande d'une soupape,
la figure 2 représente le fonctionnement d'une unité de commande de soupapes à microprocesseur conforme à l'invention,
la figure 3 représente le couple fourni par un moteur en fonction du régime de ce dernier et de différents modes de fonctionnement conformes à l'invention,
la figure 4 représente des opérations d'activation et de désactivation de cylindres conformes à l'invention et déclenchées par des variations du régime du moteur,
la figure 5 représente des opérations d'activation et de désactivation de cylindres conformes à l'invention déclenchées par des variations du couple commandé au moteur,

les figures 6a, 6b et 6c représentent des tests de fonctionnement d'un moteur destinés à commander l'activation ou la désactivation de cylindres conformément à l'invention,

les figures 7a, 7b, 7c et 7d représentent des applications des tests d'activation ou de désactivation de cylindres décrits aux figures 6a, 6b ou 6c,

les figures 8a et 8b représentent les couples fournis par les cylindres d'un moteur conforme à l'invention lors d'une désactivation de cylindres,

la figure 8c représente des délais de fonctionnements considérés lors d'une désactivation,

la figure 8d représente l'évolution des couples fournis par les cylindres d'un moteur conforme à l'invention lors d'une activation de cylindres,

la figure 9 est un diagramme représentant le couple fourni par un moteur en fonction du régime de ce dernier et du nombre de soupapes d'admission activées pour chaque cylindre,

la figure 10 représente la chronologie d'une activation de soupape d'admission conformément à une première variante de l'invention,

la figure 11 représente une chronologie d'activation de soupape d'admission conformément à une deuxième variante de l'invention, et

la figure 12 est un diagramme représentant le couple fourni par un moteur en fonction du régime de ce dernier et d'un mode de commande utilisé pour chaque soupape.

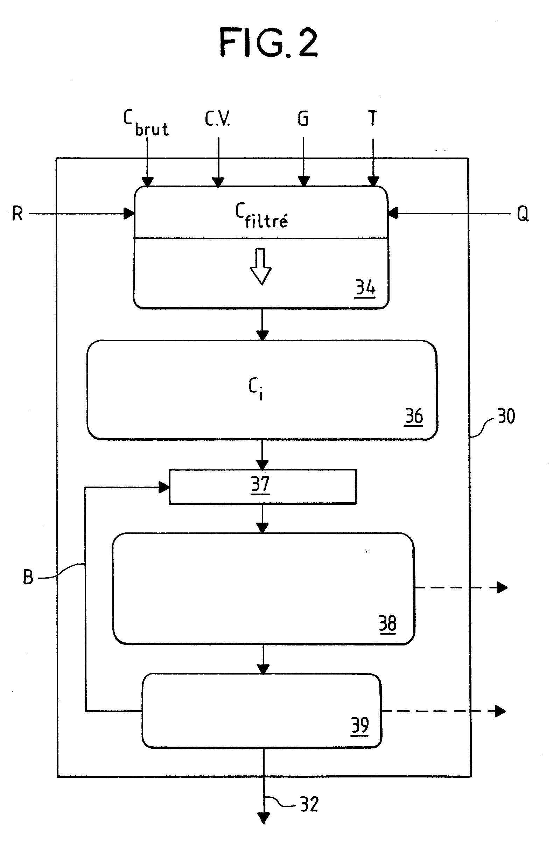

Dans la réalisation de l'invention décrite ci-dessous, une unité 30 de commande (figure 2) contrôle les actionneurs électromécaniques de soupapes d'un moteur (non représentés) de façon à optimiser la consommation de ce dernier en modifiant le nombre de cylindres actifs dans le moteur, c'est-à-dire générant un couple moteur.

Cette unité 30 est par ailleurs utilisée pour filtrer le couple brut commandé par le conducteur du véhicule, dénommé par la suite $C_{brut}$, en un couple filtré, dénommé par la suite $C_{filtre}$, de façon à assurer un agrément de conduite limitant, par exemple, des variations de couple trop brusques.

A cet effet, cette unité 30 reçoit des informations C.V. concernant la conduite du véhicule, telles que le mode de conduite ou la vitesse du véhicule, et des informations concernant le fonctionnement du moteur, à savoir son régime R, le couple $C_{brut}$ commandé par le conducteur, la température T du système de refroidissement, la quantité Q de carburant injecté dans chaque cylindre et la richesse G moyenne des gaz d'échappement.

L'unité 30 commande alors les actionneurs électromécaniques de soupapes du moteur en accord avec une cartographie préalablement définie (par exemple de façon empirique) déterminant le nombre de cylindres actifs qui, en fonction de ces informations, optimisent la consommation de carburant du moteur.

Toutefois, si des précautions ne sont pas prises, ces commandes des actionneurs électromécaniques peuvent perturber le fonctionnement du moteur. Par exemple, un défaut de synchronisation dans le fonctionnement des soupapes de différents cylindres peut provoquer des vibrations des éléments du moteur (cylindre, vilebrequin, etc.) et/ou des discontinuités dans le couple fourni par le moteur. En outre, une désactivation de cylindre(s) peut provoquer un accroissement du temps de réponse à une demande d'accélération, ce qui serait dangereux, par exemple lors d'un dépassement.

Pour éviter ces perturbations, l'unité centrale 30 commande les actionneurs de soupapes désactivées, c'est-à-dire maintenues fermées, après avoir déterminé successivement trois modes distincts de fonctionnement du moteur décrits ci-dessous dans l'ordre de détermination:

- Le premier mode de fonctionnement est relatif au nombre de cylindres actifs, c'est-à-dire au nombre de cylindres délivrant un couple moteur. Dans la réalisation considérée en exemple, le moteur comprend quatre cylindres pouvant fonctionner selon un mode à quatre cylindres, les quatre cylindres fournissant un couple moteur, ou selon un mode à deux cylindres, seuls deux cylindres fournissant un couple moteur. Pour cela, les soupapes des cylindres actifs sont maintenues actives, c'est-à-dire commandées suivant le cycle à quatre temps déjà décrit, tandis que les soupapes des cylindres inactifs sont désactivées, c'est-à-dire maintenues en position fermée.

Dans cette réalisation, toutes les soupapes d'admission sont commandées au moyen d'actionneurs munis d'électroaimants, tel que l'actionneur représenté à la figure 1. De même, les soupapes d'échappement des cylindres 1 et 4 sont à commande électromécanique tandis que les soupapes d'échappement des cylindres 2 et 3 sont commandées au moyen d'actionneurs à butées hydrauliques débrayables.

- Le deuxième mode de fonctionnement est relatif au nombre et au type de soupapes d'admission actives dans chaque cylindre. En effet, dans cet exemple, chaque cylindre comprend deux soupapes d'admission pouvant être commandées indépendamment l'une de l'autre par deux actionneurs électromécaniques indépendants tels que décrits à la figure 1. On peut ainsi utiliser ou activer une ou deux soupapes d'admission par cylindre actif.

En outre, dans l'exemple, chacune de ces deux soupapes a des fonctions différentes: une soupape, dite paire, contrôle un conduit d'admission d'air, tandis que la deuxième soupape, dite impaire, contrôle un conduit d'admission d'air et de carburant.

- Le troisième mode de fonctionnement est relatif au mode de levée utilisé pour chaque soupape active. Dans cet exemple, on considère que les soupapes d'admission peuvent être commandées suivant un mode classique tel que les instants d'ouverture et de fermeture de ces soupapes sont déterminés et commandés, ou suivant un mode balistique tel que l'instant de fermeture d'une soupape n'est pas commandé mais déterminé par le temps nécessaire à celle-ci pour passer d'une position fermée à la position ouverte puis, sans arrêt, revenir à la position fermée. En d'autres termes, le mode classique utilise une commande d'ouverture et une commande de fermeture de soupape tandis que le mode balistique n'utilise qu'une commande d'ouverture.

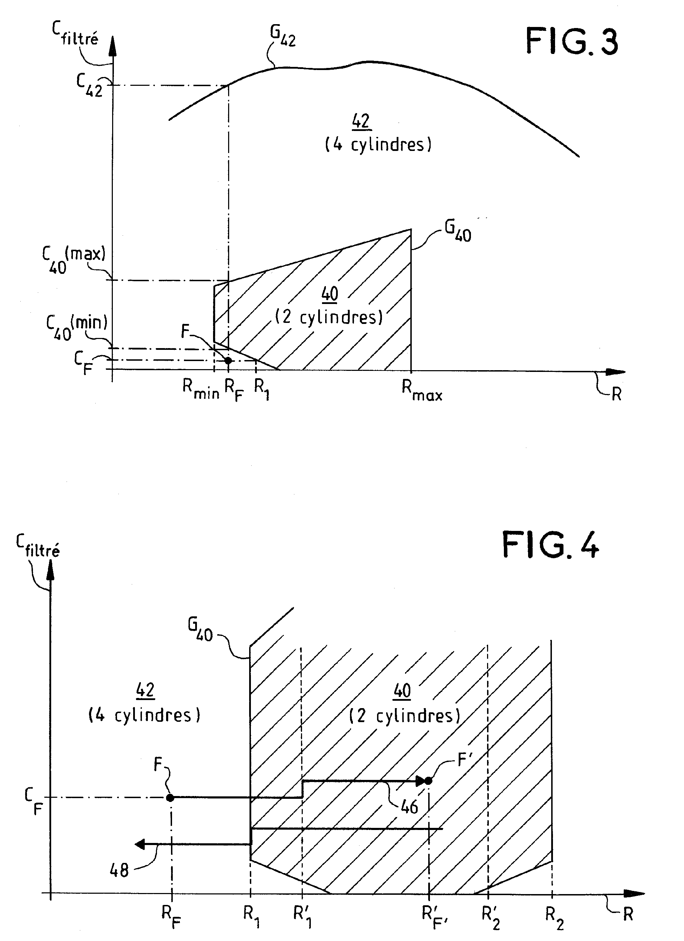

Cette succession de choix de modes de fonctionnement est représentée par des blocs 34, 38 et 39, les moyens permettant d'effectuer ces choix étant décrits en détail ultérieurement à l'aide des figures 3 à 13. A la suite de ces choix, un signal 32 est émis par l'unité 30 pour commander chaque actionneur conformément à ces choix.

Dans un premier temps, pour déterminer le premier mode de fonctionnement, c'est-à-dire le nombre de cylindres actifs, l'unité 30 est informée des paramètres déjà indiqués à savoir le couple $C_{brut}$ commandé au moteur, le régime R de ce dernier, la température T de l'eau de refroidissement, la quantité Q de carburant injecté dans le cylindre, des informations C.V. propres à la conduite du véhicule et la richesse G moyenne des gaz d'échappement.

A la suite de cette acquisition de données, le filtrage du couple $C_{brut}$ commandé par le conducteur du véhicule en un couple $C_{filtre}$ réellement commandé au moteur est effectué, puis le choix d'un mode à deux ou quatre cylindres est opéré (bloc 34).

Dans un deuxième temps, lorsqu'un mode à deux ou quatre cylindres est choisi, on détermine (bloc 36) le couple $C_i$ devant être délivré par chaque cylindre (i) maintenu actif de façon à éviter des discontinuités dans le couple délivré par le moteur lors du changement de mode.

Lorsque le couple $C_i$ est déterminé, cette donnée est transmise (bloc 37), puis on détermine pour chaque cylindre actif, le nombre et le type de soupapes d'admission actives (bloc 38) et le mode de levée classique ou balistique utilisé pour chaque soupape maintenue active(bloc 39) dans le cylindre i considéré. Ces déterminations sont effectuées à chaque appel de la fonction contrôle du moteur, c'est-à-dire à chaque demi-tour du moteur. De façon plus précise les diverses consignes sont déterminées une fois par cycle de chaque cylindre. Comme le moteur dispose de quatre cylindres et un cycle dure deux tours moteur, la détermination pour chaque cylindre correspond donc à une durée d'un demi-tour moteur.

La boucle B montrée sur la figure 2 représente la mise à jour permanente des déterminations des divers modes.

Les choix des modes de fonctionnement (blocs 34, 38 et 39) utilisent des données établies à l'aide de tests préalables du moteur permettant d'établir, par exemple, les courbes représentées sur la figure 3.

Sur cette figure 3 on a porté en abscisses le régime R du moteur (en tours/min) et en ordonnées le couple $C_{filtre}$ commandé au moteur (en N.m.). Des courbes $G_{40}$ et $G_{42}$ délimitent, respectivement, des zones 40 et 42 de fonctionnement du moteur testé en mode deux cylindres (zone 40) ou en mode quatre cylindres (zone 42).

En d'autres termes, le moteur testé peut délivrer un couple $C_F$ à un régime $R_F$ si le point F de fonctionnement d'abscisse $C_F$ et d'ordonnée $R_F$ se situe dans une zone correspondant à ce mode. Ainsi, le point F de fonctionnement représenté sur la figure 3 est situé dans la zone 42 et seul le mode à quatre cylindres délivre le couple $C_F$ et le régime $R_F$ requis.

A partir de la figure 3 sont déterminées les limites du mode deux cylindres et du mode quatre cylindres en termes de régime et de couple du moteur. Lorsque le régime R est inférieur au régime $R_{min}$ minimal du mode à deux cylindres, ou supérieur au régime $R_{max}$ maximal de ce mode à deux cylindres, seul le mode quatre cylindres peut être utilisé par le moteur.

De même, le régime $R_F$ du moteur étant donné, le mode à quatre cylindres est limité à un couple maximal $C_{42}$ tandis que le mode à deux cylindres est limité à un couple maximal $C_{40}(max)$ ou minimal $C_{40}(min)$.

De façon analogue, les limites en régime de chaque mode de fonctionnement peuvent être établies pour un couple déterminé. Par exemple, un couple $C_F$ étant fixé pour le moteur, le mode deux cylindres présente un régime $R_1$ minimal au dessous duquel le mode à deux cylindres ne peut être utilisé, de même qu'un régime $R_{max}$ maximal au-delà duquel le mode deux cylindres ne peut être utilisé.

Dans la suite du document, on admettra que le mode à deux cylindres est plus économique, à couple et régime égaux, que le mode à quatre cylindres. Ainsi, lorsque le moteur fonctionne à un point de fonctionnement situé dans la zone 40, le mode à deux cylindres est préférable.

Lorsque le point F de fonctionnement du moteur est proche de la zone 40, des changements de modes répétés peuvent se produire si ce point F varie entre les zones 40 et 42 et si la courbe $G_{40}$ était utilisée comme le seuil de déclenchement de chaque mode. Par exemple, une légère augmentation du régime R du moteur depuis $R_F$ jusqu'à une valeur supérieure à $R_1$ entraînerait le déclenchement du mode à deux cylindres, et une légère baisse ultérieure de ce régime au-dessous du régime $R_1$, entraînerait un retour au mode à quatre cylindres.

De tels changements de mode, répétés avec une fréquence élevée, perturberaient sensiblement la conduite du véhicule. Pour éviter ces perturbations, le changement du nombre de cylindres actifs utilise deux stratégies de stabilisation considérant, respectivement, un changement dû à une variation du régime R ou un changement dû à une variation du couple $C_{filtre}$ commandé au moteur.

Dans le cas où une variation de régime R est considérée, un premier régime seuil $R_1$ de déclenchement du mode à quatre cylindres et un deuxième régime seuil $R_1'$ de déclenchement du mode à deux cylindres, distinct du premier, sont utilisés pour définir une plage de stabilité entre ces seuils comme représenté sur la figure 4, qui est un agrandissement d'une partie de la figure 3 sur laquelle sont représentées les zones 42 (mode à quatre cylindres) et 40 (mode à deux cylindres), ainsi que la courbe $G_{40}$.

On a aussi représenté un point F de fonctionnement situé dans la zone 42, le moteur étant alors en mode à quatre cylindres. Lorsque son régime R augmente et passe dans la zone 40 (flèche 46), le mode à deux cylindres n'est établi que lorsque le régime R atteint un seuil $R'_1$ de déclenchement du mode à deux cylindres supérieur au régime $R_1$ de la courbe $G_{40}$ précédemment déterminée (figure 3). En d'autres termes, sur la plage de régime $[R_1 ; R'_1]$, le mode à quatre cylindres est imposé alors même que le mode à deux cylindres serait plus économe.

On considère par la suite que, le mode à deux cylindres étant établi, le moteur se stabilise et opère à un point de fonctionnement F' de régime $R'_{F'}$ supérieur à $R'_1$. Dès lors, une diminution du régime du moteur à partir de la valeur $R'_{F'}$ (flèche 48) ne déclenche le mode à quatre cylindres que lorsque ce régime devient inférieur au seuil $R_1$ de déclenchement de ce mode.

L'exemple décrit ci-dessus est relatif à un passage du mode à quatre cylindres vers un mode à deux cylindres déclenché par une augmentation du régime, et à un passage du mode à deux cylindres vers le mode à quatre cylindres déclenché par diminution du régime. De façon similaire à cet exemple, le passage d'un mode à quatre cylindres vers un mode à deux cylindres déclenché par une diminution de régime, et le passage d'un mode à deux cylindres vers un mode à quatre cylindres déclenché par une augmentation de régime utilise un seuil $R_2$ (figure 4) de déclenchement du mode à quatre cylindres et un seuil $R'_2$ de déclenchement du mode à deux cylindres de façon à définir une plage $[R'_2 ; R_2]$ de stabilité.

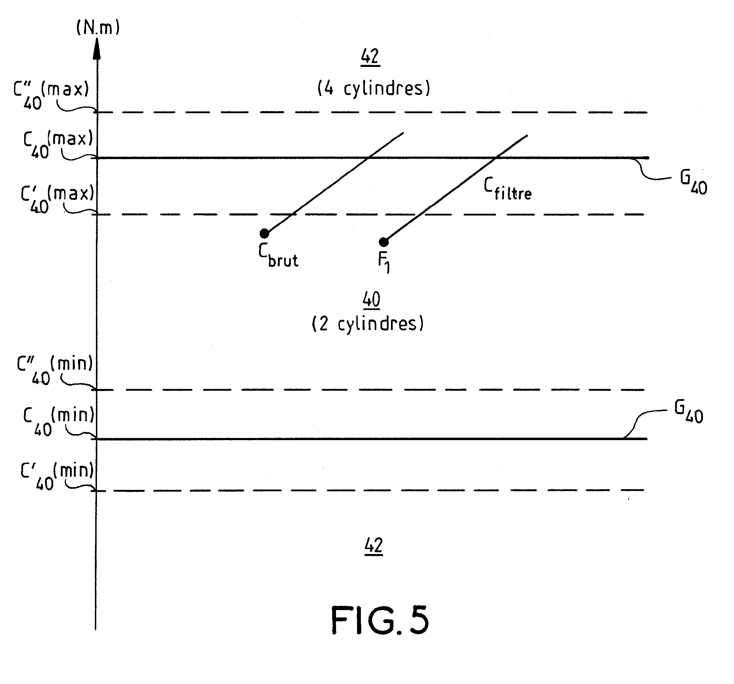

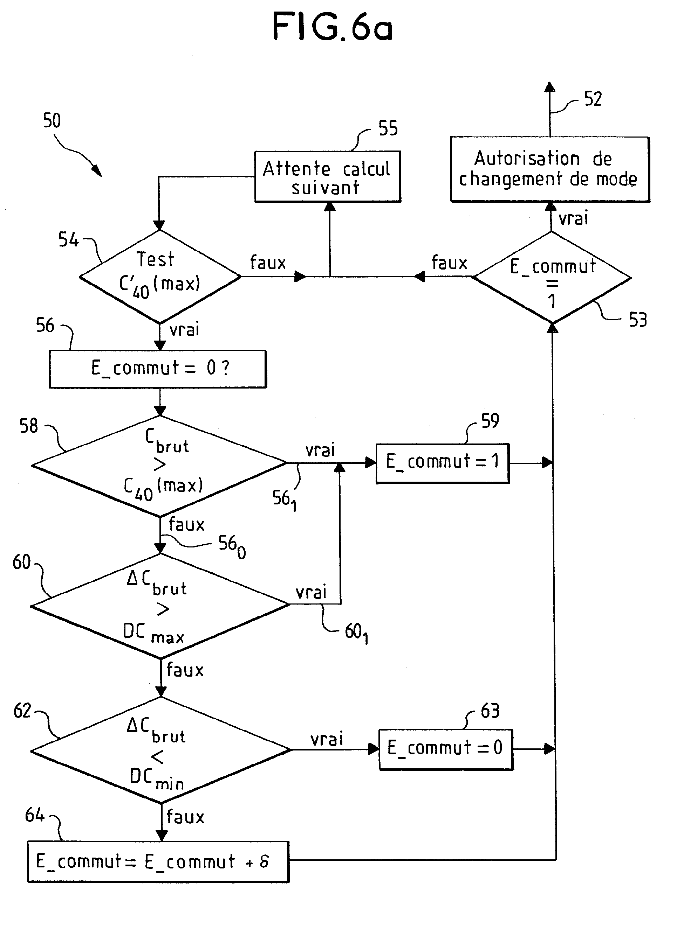

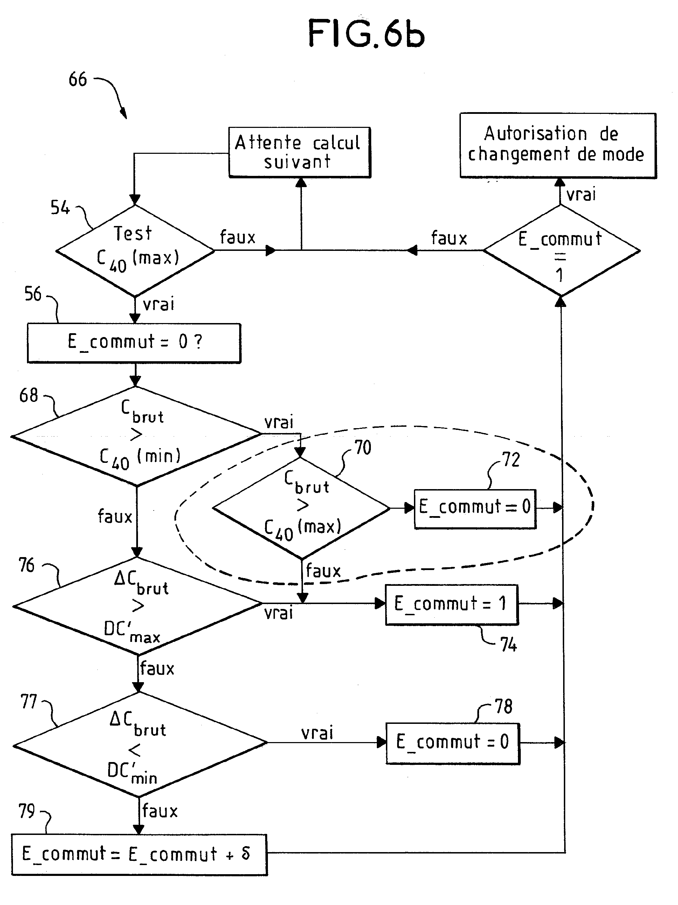

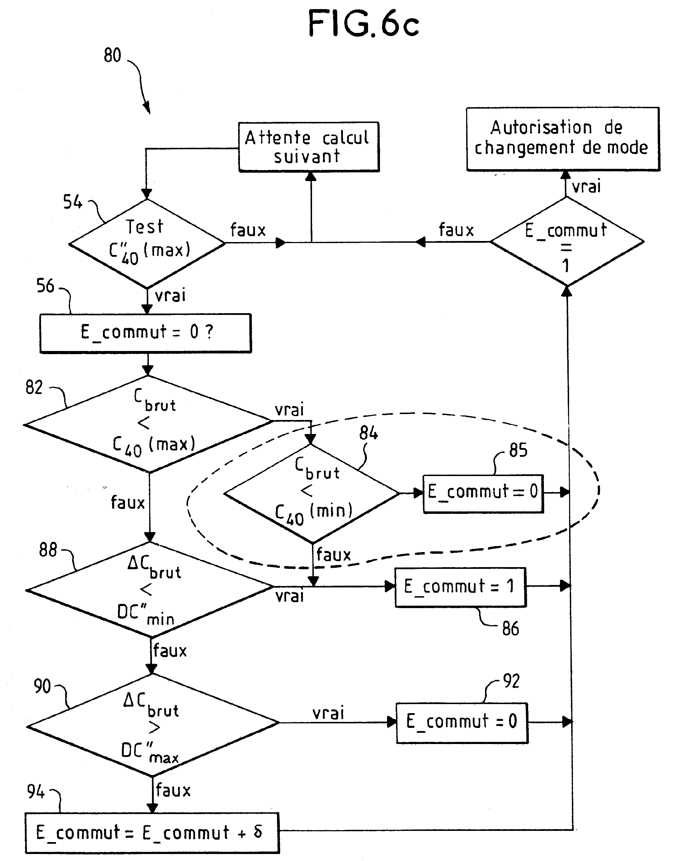

Dans le cas où le changement du nombre de cylindres actifs est dû à une variation du couple $C_{filtre}$ requis au moteur, la stratégie de stabilisation prend aussi en compte la valeur et les variations du couple $C_{brut}$ commandé par l'utilisateur comme décrit ci-dessous à l'aide des figure 5, 6a, 6b et 6c.

Sur la figure 5 est représentée une partie de la figure 3 comprenant les couples maximal $C_{40}(max)$ et minimal $C_{40}(min)$ du mode à deux cylindres issus de la courbe $G_{40}$ (figure 3), ces couples $C_{40}(max)$ et $C_{40}(min)$ étant utilisés (et dénommés) par la suite comme seuils de déclenchement. Des variations des couples filtrés (courbe $C_{Filtre}$) et brut (couple $C_{Brut}$) sont aussi représentées.

On observe qu'une augmentation du couple $C_{brut}$ génère une augmentation du couple $C_{filtre}$ avec un retard dû au filtrage effectué par l'unité 30 (figure 3) comme précédemment décrit.

Initialement, le moteur fonctionne suivant un mode à deux cylindres, son point $F_1$ de fonctionnement correspondant à un couple inférieur au seuil $C_{40}$ de déclenchement. Lorsque le couple $C_{Filtre}$ augmente et atteint un seuil $C'_{40}(max)$ de test inférieur au couple $C_{40}(max)$, la valeur du couple $C_{Brut}$ est considérée pour déterminer si le mode à quatre cylindres doit être déclenché.

Dans ce cas, si la valeur du couple $C_{Brut}$ a atteint la valeur du couple $C_{40}(max)$ de déclenchement, le mode à quatre cylindres est déclenché.

Un tel seuil $C'_{40}(max)$ de test est utilisé pour prendre en compte les variations du couple $C_{brut}$ et déclencher un changement de mode avant que le couple $C_{filtre}$ n'atteigne le seuil $C_{40}(max)$ de déclenchement. Une telle utilisation permet de considérer des situations telles que lorsqu'une augmentation importante de couple $C_{brut}$ est requise pour effectuer un dépassement et que le moteur fonctionne selon le mode à deux cylindres.

Dans ce cas, il convient de déclencher le mode à quatre cylindres avant que le seuil $C_{40}(max)$ de déclenchement de ce mode soit atteint par le couple $C_{filtre}$ requis de façon à permettre l'augmentation de couple requise.

De façon analogue au couple $C'_{40}(max)$, des couples $C'_{40}(min)$, $C''_{40}(max)$ et $C''_{40}(min)$ de test sont utilisés dans les cas où l'on considère, respectivement, un déclenchement du mode à deux cylindres par augmentation du couple requis, un déclenchement du mode à deux cylindres par une diminution du couple requis et un déclenchement du mode à quatre cylindres par une diminution du couple requis. Par exemple, si le couple $C_{filtre}$ atteint le seuil $C''_{40}(min)$ de test tandis que le couple $C_{brut}$ atteint le seuil $C_{40}(min)$, le mode à quatre cylindres est déclenché.

Suivant une situation particulière, lorsque les couples $C_{filtre}$ et $C_{brut}$ varient fortement, le moteur fonctionnant selon un mode à quatre cylindres, et que, le couple $C_{filtre}$ se situant dans une zone de fonctionnement à deux cylindres, le couple $C_{brut}$ traverse cette zone et se situe dans une zone à quatre cylindres, il convient de maintenir le mode à quatre cylindres malgré la présence du couple $C_{filtre}$ dans la zone à deux cylindres.

Par ailleurs, il convient de déclencher un premier mode lorsque, le moteur fonctionnant suivant un deuxième mode, le couple requis $C_{brut}$ varie fortement de façon à anticiper le déclenchement du premier mode.

A cet effet, on définit des seuils maximal et minimal de variation $\Delta C_{brut}$ du couple $C_{brut}$ utilisés dans les quatre cas possibles de changement de modes, à savoir:

a) le passage d'un mode à deux cylindres vers un mode à quatre cylindres lorsque le couple augmente,
b) le passage d'un mode à deux cylindres vers un mode à quatre cylindres lorsque le couple diminue,
c) le passage d'un mode à quatre cylindres vers un mode à deux cylindres lorsque le couple augmente, et
d) le passage d'un mode à quatre cylindres vers un mode à deux cylindres lorsque le couple diminue.

Le premier cas (a) et le troisième cas (c) sont analogues puisqu'une augmentation $\Delta C_{brut}$ du couple est considérée.

De fait, dans ces deux cas (a) et (c), le moteur change de mode si, le couple $C_{filtre}$ ayant atteint un seuil de test, la variation de couple est supérieure au seuil maximal considéré. Dans ces deux cas, $\Delta C_{brut}$ est positif ainsi que les seuils maximal et minimal considérés.

Si l'augmentation $\Delta C_{brut}$ de couple est inférieure au seuil maximal, la valeur de cette augmentation est comparée à un seuil minimal tel que, si cette augmentation $\Delta C_{brut}$ est inférieure au seuil minimal, elle est considérée comme faible et aucun changement de mode n'est effectué.

Inversement, lorsque cette augmentation $\Delta C_{brut}$ est comprise entre le seuil maximal et le seuil minimal, cette variation est mémorisée pour déclencher le changement de mode indépendamment de la valeur de $C_{brut}$ si cette variation se maintient. On anticipe ainsi le déclenchement d'un mode en extrapolant la variation du couple mémorisée de façon continue.

Le second cas (b) et le quatrième cas (d) sont analogues en ce que, une diminution $\Delta C_{brut}$ du couple $C_{brut}$ étant considérée, le moteur change de mode si, le couple $C_{filtre}$ ayant atteint un seuil de test, la variation de couple est inférieure à un seuil minimal considéré. Dans ces deux cas, $\Delta C_{brut}$ est négatif ainsi que les seuils maximal et minimal. Une variation de couple inférieure à un seuil signifie qu'en valeur absolue cette variation est supérieure à la valeur absolue du seuil.

Si cette diminution $\Delta C_{brut}$ de couple est supérieure au seuil minimal, cette variation est comparée à un seuil maximal tel que, si cette diminution $\Delta C_{brut}$ est supérieure au seuil minimal, elle est considérée comme faible et aucun changement de mode n'est effectué.

Inversement, si cette augmentation $\Delta C_{brut}$ est comprise entre le seuil minimal et le seuil maximal, cette variation est mémorisée pour déclencher le changement de mode lorsqu'elle se maintient. On anticipe ainsi le déclenchement d'un mode en extrapolant la variation du couple mémorisée de façon continue.

Afin d'illustrer ces modes de fonctionnement on décrit tout d'abord un exemple relatif au cas a), c'est-à-dire relatif au changement d'un mode à deux cylindres vers un mode à quatre cylindres lors d'une augmentation de couple.

Dans cet exemple on fait appelle à un test 50 représenté sur la figure 6a qui comprend une suite d'opérations effectuées tous les demi-tours moteur afin de déterminer le déclenchement éventuel du mode à quatre cylindres à la suite d'une augmentation de couple.

Ce test 50 utilise une variable $E_{commut}$, dont la valeur varie entre zéro et un, et est telle qu'une commande 52 d'application du mode à quatre cylindres est transmise au moteur si un test (bloc 53) détecte que cette variable $E_{commut}$ est égale à un. Autrement, le mode à deux cylindres est maintenu.

Lors d'une première opération, l'unité centrale teste (bloc 54) les conditions de fonctionnement du moteur et du véhicule. En effet, dans la réalisation décrite, le mode à quatre cylindres est immédiatement imposé lorsque le moteur fonctionne en mode dit « vanné » (c'est-à-dire lorsque le remplissage en air du moteur est contrôlé mécaniquement par un papillon), lorsque le moteur est débrayé, aucun rapport de la boîte de vitesse n'étant engagé, lorsque le moteur fonctionne au ralenti et/ou lorsque le conducteur n'appuie pas sur l'accélérate

L'unité centrale teste aussi si le couple $C_{filtre}$ a atteint le seuil $C'_{40}(max)$ de test considéré dans ce cas. Si tel n'est pas le cas, on attend (bloc 55) un demi-tour moteur avant de redémarrer le test (bloc 54).

Autrement, si le couple $C_{filtre}$ est supérieur au couple $C'_{40}(max)$ de test, on impose la valeur 0 à la variable $E_{commut}$ (bloc 56) si le couple $C_{filtre}$ atteint le couple seuil $C'_{40}(max)$ de test préalablement au déroulement de ce test 50.

Inversement, si ce seuil $C'_{40}(max)$ a été franchi lors d'un test précèdent 50, la variable $E_{commut}$ est maintenue à sa valeur déterminée en fin de ce test précédent.

Ensuite, la valeur du couple $C_{brut}$ est comparée au couple $C_{40}(max)$ de déclenchement (bloc 58). Si le couple $C_{brut}$ est supérieur au couple $C_{40}(max)$, le mode à quatre cylindres est déclenché par l'émission d'un signal $56_1$ entraînant la variation (bloc 59) de la variable $E_{commut}$ de la valeur 0 à la valeur 1.

Si le couple $C_{brut}$ requis est inférieur à $C_{40}(max)$, le contrôleur émet un signal $56_0$ afin d'évaluer la variation $\Delta C_{brut}$ du couple $C_{brut}$ par rapport aux valeurs seuils $DC_{max}$ maximal et $DC_{min}$ minimal utilisés dans ce test. Pour déterminer $\Delta C_{brut}$, le couple $C_{brut}(t-1)$ requis à l'instant $(t-1)$ est soustrait au couple $C_{brut}$ requis à l'instant t, t étant une variable associée au temps $\Delta C_{brut} = (C_{brut}(t) - C_{brut}(t-1))$. L'écart entre t et t-1 correspond au temps écoulé entre deux appels successifs de la fonction contrôle moteur, c'est-à-dire au temps écoulé pendant un demi-tour moteur (ce temps dépend donc du régime du moteur).

Si la variation $\Delta C_{brut}$ est supérieure à $DC_{max}$, un signal $60_1$ entraîne la variation de la variable $E_{commut}$ vers la valeur 1, le mode à quatre cylindres étant imposé au moteur. Ce test est représenté par le bloc 60.

Si la variation $\Delta C_{brut}$ est inférieure ou égale à $DC_{max}$, cette variation $\Delta C_{brut}$ est comparée au seuil minimal $DC_{min}$ (bloc 62). Lorsque la variation $\Delta C_{brut}$ est inférieure à $DC_{min}$, cette variation $\Delta C_{brut}$ n'est pas prise en compte et on maintient (bloc 63) la variable $E_{commut}$ à zéro tandis qu'un nouveau cycle de calcul est effectué.

Lorsque $\Delta C_{brut}$ est supérieure à $DC_{min}$, on modifie $E_{commut}$ en $E_{commut} + \delta$, $\delta$ étant constant, cette nouvelle valeur de $E_{commut}$ étant mémorisée après avoir vérifié (bloc 53) qu'elle n'atteignait pas un, auquel cas le mode à quatre cylindres est déclenché.

Pour le passage d'un mode à deux cylindres vers un mode à quatre cylindres lorsque le couple diminue (cas (b) mentionné ci-dessus) le procédé se déduit de celui décrit en relation avec la figure 6a avec cependant les modifications suivantes :

- le test 54 compare le couple $C_{filtre}$ avec un seuil $C''_{40}(min)$ de test (figure 5) supérieur à $C_{40}(min)$ pour déterminer si le test doit être effectué,
- le test 58 utilise le seuil $C_{40}(min)$ de telle sorte que, si le couple $C_{brut}$ requis est inférieur à ce seuil $C_{40}(min)$, le mode à quatre cylindres est déclenché,
- le test 60 compare la variation $\Delta C_{brut}$ à un seuil minimal de telle sorte que, si cette variation $\Delta C_{brut}$ est inférieure à ce seuil minimal, le mode à quatre cylindres est déclenché, et

le test 62 compare la variation $\Delta C_{brut}$ à un seuil maximal de telle sorte que, si $\Delta C_{brut}$ est supérieur à ce seuil maximal, cette variation n'est pas considérée tandis que, si $\Delta C_{brut}$ est comprise entre le seuil maximal et le seuil minimal, la variable $E_{commut}$ est modifiée en $E_{commut}$ plus $\delta$.

Lorsque le moteur fonctionne en mode à quatre cylindres, des cycles 66 (figure 6b) et 80 (figure 6c) de tests, analogues au cycle 50, sont effectués par l'unité 30 pour contrôler l'éventuel déclenchement du mode à deux cylindres, le cycle 66, respectivement le cycle 80, étant considéré lorsque le déclenchement d'un mode à deux cylindres est dû à une augmentation de couple, respectivement à une diminution de couple.

En d'autres termes, la figure 6b est un organigramme qui correspond au cas c), c'est-à-dire au passage d'un mode à quatre cylindres vers un mode à deux cylindres lorsque le couple augmente.

Le cycle 66 de test comprend des opérations déjà décrites telles que le test (bloc 54) des conditions de fonctionnement du véhicule et la mise à zéro de la variable $E_{commut}$ (bloc 56) si le seuil de test ($C'_{40}(min)$) considéré est franchi lors de l'exécution de ce test.

Par la suite, un test (bloc 68) compare le couple $C_{brut}$ demandé au seuil $C_{40}(min)$ de déclenchement du mode à deux cylindres. Si le couple $C_{brut}$ est supérieur au seuil $C_{40}(min)$ de déclenchement, le mode à deux cylindres est établi.

Toutefois, si le couple $C_{brut}$ augmente fortement, cette augmentation peut entraîner le déclenchement du mode à quatre cylindres peu après sa désactivation. En d'autres termes, cette augmentation de couple peut être telle que le point de fonctionnement du moteur va rapidement traverser la zone 40 du mode à deux cylindres et se situer à nouveau dans la zone 42 du mode à quatre cylindres. Dans ce cas, le déclenchement du mode à deux cylindres doit être évité.

C'est pourquoi, on utilise le couple $C_{40}(max)$ de déclenchement pour effectuer un test (bloc 70) comparant le couple $C_{brut}$ à ce couple $C_{40}(max)$. Si ce dernier est inférieur au couple $C_{brut}$, on considère que le couple $C_{brut}$ augmente de façon suffisamment importante pour que le déclenchement du mode à deux cylindres soit empêché par un maintien (bloc 72) de $E_{commut}$ à zéro. Par contre, si $C_{brut}$ est inférieur à $C_{40}(max)$, le changement de mode s'effectue par un maintien (bloc 74) de $E_{commut}$ à 1.

Dans le cas où le couple $C_{brut}$ est inférieur à $C_{40}(min)$ la variation $\Delta C_{brut}$ de ce couple est comparée à deux valeurs seuils $DC'_{max}$ (bloc 76) maximal et $DC'_{min}$ minimal. Ainsi, si la variation $\Delta C_{brut}$ est supérieure à $DC'_{max}$, le mode à deux cylindres est déclenché (bloc 74).

Au contraire, si $\Delta C_{brut}$ est inférieure à $DC'_{max}$, la variation $\Delta C_{brut}$ est comparée à $DC'_{min}$ de telle sorte que, si elle est inférieure à $DC'_{min}$, la valeur de $E_{commut}$ est maintenue à zéro (bloc 78) pour empêcher un changement de mode, ou si elle est supérieure à $DC'_{min}$, la valeur de $E_{commut}$ est établie à $E_{commut} + \delta$ (bloc 79) de façon à anticiper un changement de mode comme précédemment décrit.

On va maintenant décrire avec la figure 6c le cas d) à savoir un changement du mode à quatre cylindres vers un mode deux cylindres du à une diminution du couple demandé.

Ainsi, sur la figure 6c est représenté un cycle 80 de tests relatifs à un changement du mode à quatre cylindres vers le mode à deux cylindres dû à une diminution du couple demandé. Ce cycle comprend les opérations 54 et 56 déjà décrites, le couple $C_{40}$" (max) étant utilisé comme couple de test. Lorsque le couple $C_{filtre}$ atteint ce couple $C_{40}$" (max), un test 82 compare le couple $C_{brut}$ au couple $C_{40}$(max) de déclenchement du mode à deux cylindres tel que décrit à la figure 3.

De façon analogue à l'opération 70 du test 66, si le couple $C_{brut}$ est inférieur à ce seuil $C_{40}$(max), un test (bloc 84) compare la valeur du couple $C_{brut}$ par rapport au couple seuil $C_{40}$(min) pour déterminer si le couple $C_{brut}$ ne décroît pas rapidement, auquel cas un déclenchement du mode à deux cylindres serait rapidement suivi par un déclenchement du mode à quatre cylindres.

Tel est le cas si le couple $C_{brut}$ est inférieur au seuil $C_{40}$(min), auquel cas le déclenchement du mode à deux cylindres est empêché en maintenant la variable $E_{commut}$ à zéro (bloc 85).

Inversement, lorsque $C_{brut}$ est supérieur à $C_{40}$(min), la variable de basculement $E_{commut}$ est forcée à 1 (bloc 86) pour entraîner le déclenchement du mode à deux cylindres.

Lorsque le couple $C_{brut}$ n'est pas inférieur à $C_{40}$(max), des tests 88 et 90 comparent la variation $\Delta C_{brut}$ du couple demandé par rapport à deux valeurs seuils DC"$_{max}$ maximal et DC"$_{min}$ minimal, de façon à déclencher l'activation du mode à deux cylindres si cette variation $\Delta C_{brut}$ est inférieure à DC"$_{max}$ (bloc 88) ou, le cas échéant, modifier la valeur de $E_{commut}$ si cette variation est inférieure à DC"$_{min}$.

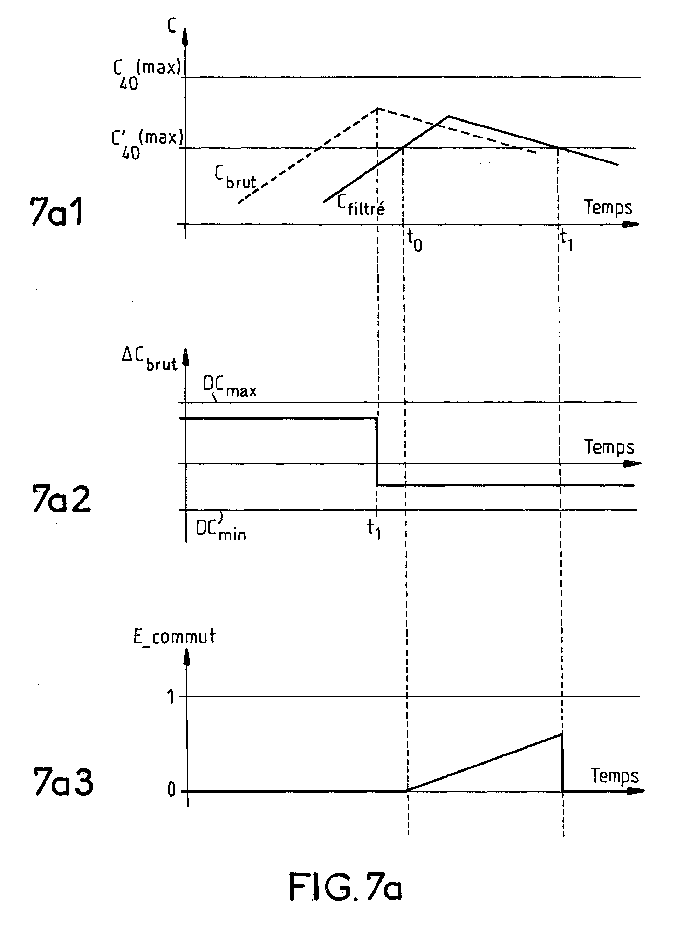

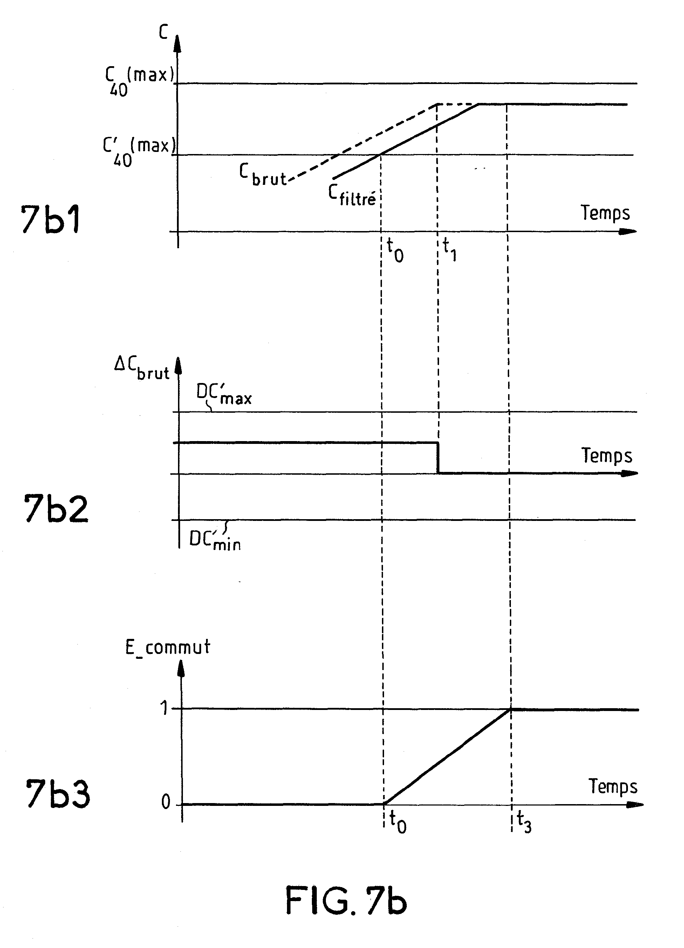

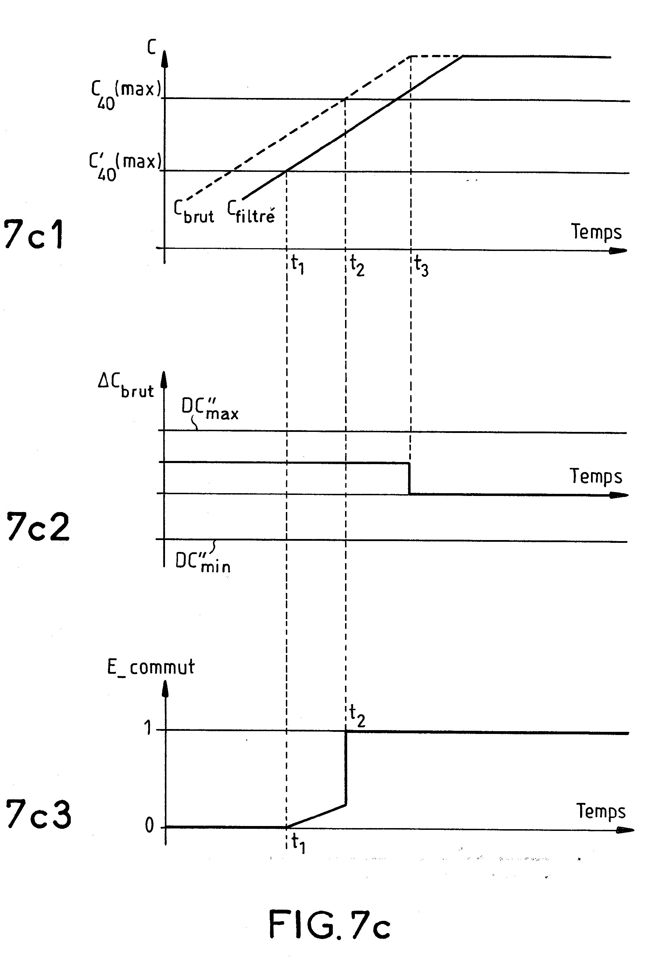

Sur les figures 7a, 7b et 7c sont représentés des exemples de variations de couple $C_{brut}$ et $C_{filtre}$ auxquelles sont appliquées les cycles de tests précédemment décrits.

La figure 7a est formée de trois diagrammes 7a.1, 7a.2 et 7a.3, le diagramme 7a.1 représentant un exemple de variation des couples $C_{brut}$ et $C_{filtre}$ (en ordonnées, en N.m) en fonction d'un axe chronologique (en abscisse). Selon cet exemple, le moteur fonctionne selon un mode à deux cylindres lorsque le couple $C_{filtre}$ dépasse le seuil C'$_{40}$(max) de test à un instant $t_0$, le couple $C_{brut}$ étant alors compris entre le couple C'$_{40}$(max) et $C_{40}$(max) et sa variation $\Delta C_{brut}$ étant comprise entre $DC_{max}$ et $DC_{min}$ (diagramme 7a.2).

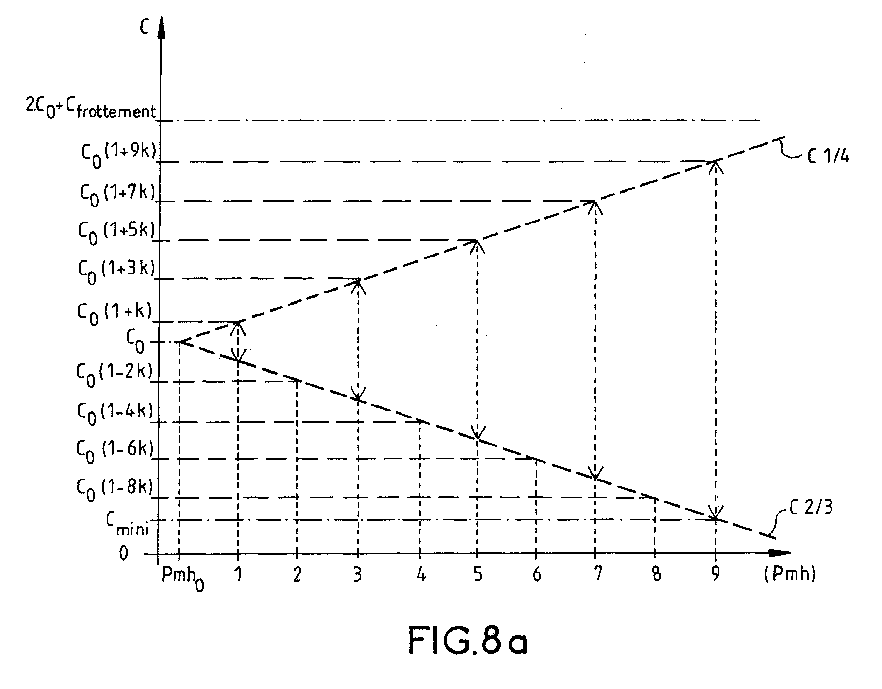

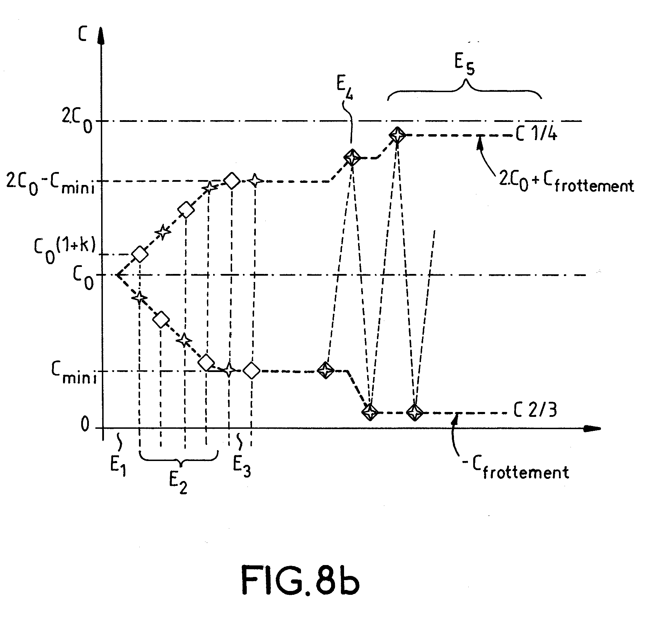

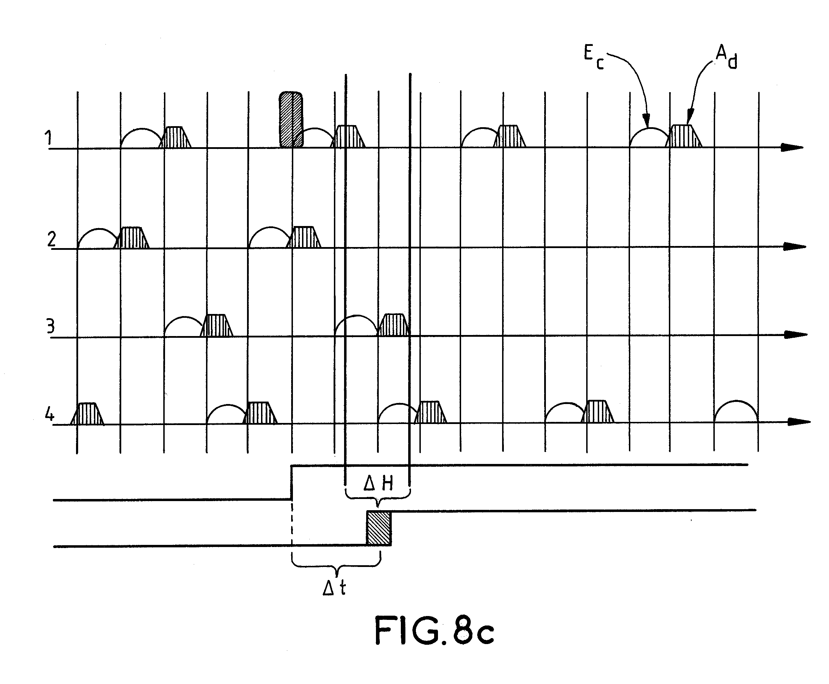

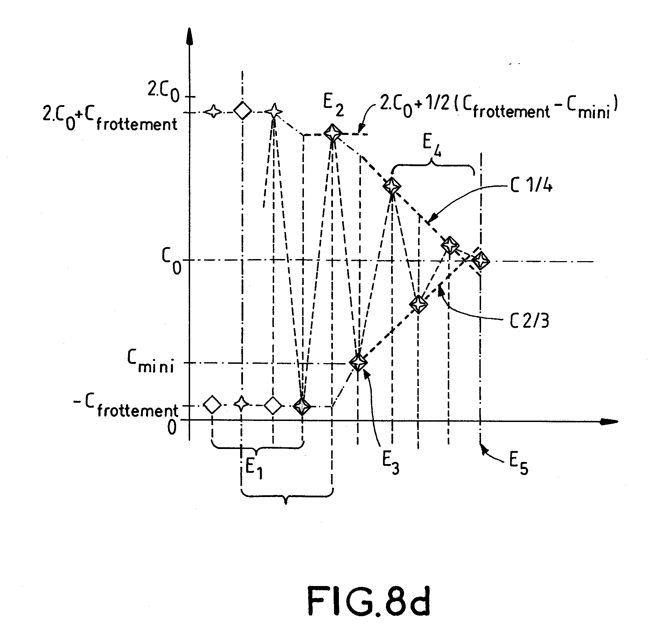

Dès lors, à cet instant $t_0$, la variable $E_{commut}$ augmente de façon constante en fonction du temps d'un indice δ (figure 8) conformément à l'opération représenté par le bloc 64 du test 50 (figure 6a).

Cette augmentation de la variable $E_{commut}$ s'achève lorsque le couple $C_{Filtre}$ diminue en deçà du seuil C'$_{40}$, à l'instant $t_1$ (conformément au test 54 de la figure 6a). A cet instant, la variable $E_{commut}$ est égalée à zéro. Au cours de sa variation, la variable $E_{commut}$ n'a pas atteint la valeur de un et le mode à deux cylindres est maintenu.

Sur la figure 7b on considère un deuxième exemple de variations des couples $C_{brut}$ et $C_{filtre}$ (diagramme 7b. 1) telles qu'à l'instant $t_0$ où le couple $C_{filtre}$ a une valeur supérieure au couple seuil C'$_{40}$(max), le couple $C_{brut}$ augmente, avec une variation $\Delta C_{brut}$ comprise entre $DC_{max}$ et $DC_{min}$, jusqu'à un instant $t_1$. Par la suite, le couple $C_{brut}$ se stabilise, la variation $\Delta C_{brut}$ devenant nulle.

La variation $\Delta C_{brut}$ étant comprise entre $DC_{max}$ et $DC_{min}$ à partir de l'instant $t_0$ (diagramme 7b.2), la variable $E_{commut}$ s'accroît d'une valeur δ à partir de cet instant $t_0$ jusqu'à atteindre la valeur de 1 à un instant $t_3$ où le mode à quatre cylindres est déclenché.

Sur la figure 7c est représenté un troisième exemple de variation des couples $C_{brut}$ et $C_{filtre}$ (diagramme 7c. 1) tel que le couple $C_{filtre}$ atteint le couple seuil C'$_{40}$ (max) à l'instant $t_1$ et le couple seuil $C_{40}$(max) à un instant $t_3$. Au cours de la période comprise entre ces deux instants $t_1$ et $t_3$, le couple $C_{brut}$ augmente avec une variation $\Delta C_{brut}$ comprise entre $DC_{max}$ et $DC_{min}$ de telle sorte que la variable $E_{commut}$ augmente avec un pas constant de δ à partir de cet instant $t_1$.

Toutefois, à un instant $t_2$ compris entre $t_1$ et $t_3$, le couple $C_{brut}$ atteint le couple seuil $C_{40}$(max) de telle sorte que la variable $E_{commut}$ est immédiatement mise à 1 (bloc 59 de la figure 6a), le mode à quatre cylindres étant déclenché.

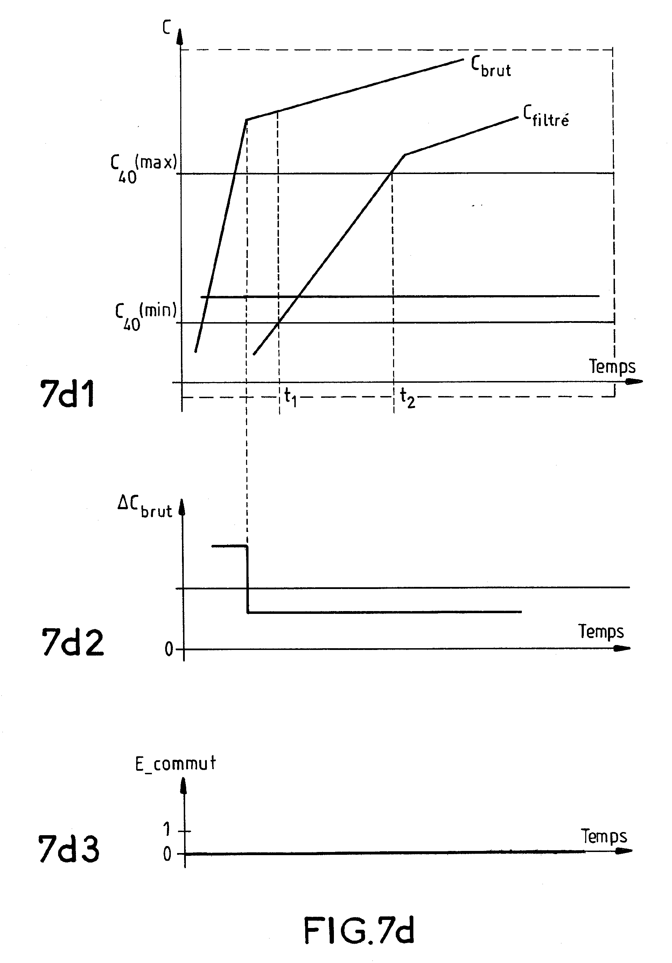

Sur la figure 7d est représenté un dernier exemple de variation des couples $C_{brut}$ et $C_{filtre}$, cet exemple utilisant le cycle de tests décrit à l'aide de la figure 6b. Dans cet exemple, le couple $C_{filtre}$ atteint le couple $C_{40}$(min) à un instant $t_1$ et le couple $C_{40}$(max) à un instant $t_2$.

Toutefois, la variation du couple $C_{brut}$ est telle qu'à l'instant $t_1$, le couple $C_{brut}$ est supérieur au couple $C_{40}$ (max) de déclenchement.

Dès lors, la variable $E_{commut}$ est maintenue à zéro et le mode à quatre cylindres est maintenu tout au long de l'intervalle $[t_1 ; t_2]$ conformément au test 6b (bloc 70).

Des tests décrits ci-dessus contrôlent l'activation ou la désactivation de cylindres. Dans cette réalisation de l'invention, ces activations/désactivations sont effectuées selon des stratégies mises en oeuvre pour éviter les dysfonctionnements de moteurs tels que précédemment décrits.

Pour décrire de telles stratégies, on considère que, lorsque le moteur fonctionne selon le mode à quatre cylindres, il délivre un couple tendant vers le couple $C_{filtre}$ tel que :

$$(C_1 + C_2 + C_3 + C_4)/4 = C_{filtre,}$$

chaque cylindre i délivrant un couple $C_i$ ($C_1$, $C_2$, $C_3$ ou $C_4$) égal à ce couple $C_{filtre}$ (quelquefois noté $C_0$ pour

simplifier).

Lorsque le moteur fonctionne selon un mode à deux cylindres pour lequel, par exemple, les cylindres 1 et 4 sont actifs et les cylindres 2 et 3 désactivés, les cylindres 2 et 3 inactifs consomment de l'énergie pour entretenir leur mouvement. Cette énergie peut correspondre à un couple négatif $-C_{frottement}$ fourni par ces cylindres, c'est-à-dire : $C_2 = C_3 = -C_{frottement}$.

Pour éviter des discontinuités dans le couple $C_{filtre}$ fourni par le moteur lors de la désactivation des deux cylindres 2 et 3, les couples $C_1$ et $C_4$ fournis par les cylindres 1 et 4 actifs doivent augmenter de façon à compenser, dans un premier temps, les diminutions des couples moteurs des cylindres 2 et 3, puis, dans un deuxième temps, les couples $-2C_{frottement}$ consommés par ces cylindres 2 et 3.

En d'autres termes, pour permettre au moteur de délivrer un couple $C_{filtre}$ en mode à deux cylindres, l'égalité suivante doit être vérifiée à la désactivation des cylindres 2 et 3:

$$[C_1 + C_4 - (2 \times C_{frottement})]) / 4 = C_{filtre,}$$

le couple fourni par chacun des cylindres 1 et 4 actifs doit donc être égal à :

$$C_1 = C_4 = 2 \times C_{filtre} + C_{frottement}.$$

Le passage d'un mode à un autre peut entraîner des vibrations ou des oscillations indésirables du véhicule. Pour éviter ces perturbations, le changement du mode à quatre cylindres vers le mode à deux cylindres est effectué progressivement comme expliqué à l'aide des figures 8a et 8b et du tableau 1 ci-dessous.

La figure 8a montre l'évolution des couples $C_{1/4,}$ fourni par les cylindres 1 et 4, maintenus actifs, et $C_{2/3,}$ fourni par les deux cylindres 2 et 3 désactivés. Sur cette figure on a porté en ordonnées la valeur C de ces couples en N.m et en abscisses l'avancement de la désactivation, cet avancement étant représenté par le nombre de points morts hauts (PMH) effectués par les cylindres à partir d'un premier $PMH_0$ pour lequel est déclenché le mode à deux cylindres, ce $PMH_0$ étant effectué par un cylindre maintenu inactif dans cet exemple.

On utilise un facteur k de variation permettant d'augmenter le couple $C_{1/4}$ de façon à compenser la diminution du couple $C_{2/3}$. A chaque cycle de fonctionnement du moteur, le couple $C_{1/4}$ devient égal à $C_{filtre}$ (1 + n.k), tandis que le couple $C_{2/3}$ devient égal à $C_{filtre}$ (1 - n.k), n étant le nombre de cycles effectués par le moteur à partir de la prise de décision de changement de mode et jusqu'au changement de mode.

Le nombre n de cycles dépend du mode d'évolution requis, c'est-à-dire d'une évolution plus ou moins rapide des couples fournis par les cylindres, et d'une valeur minimale $C_{mini}$ du couple pouvant être atteinte par les cylindres 2 et 3, valeur limite à partir de laquelle la combustion ne se produit plus dans le cylindre.

Lorsque le couple $C_{2/3}$ fourni par les cylindres 2 et 3 atteint cette valeur minimale $C_{mini}$, une stratégie de désactivation représentée sur la figure 8b est décrite à l'aide du tableau 1 ci-dessous est utilisé.

TABLEAU 1

| Avancement de la désactivation | C1/4 | C2/3 |
|---|---|---|
| Etape 1 | Cfiltre | Cfiltre |
| Etape 2 | **Cfiltre(1-k)** | Cfiltre*(1-k) |
| | Cfiltre(1+2*k) | **Cfiltre*(1-2*k)** |
| | **Cfiltre(1+3*k)** | Cfiltre*(1-3*k) |
| | Cfiltre(1+4*k) | **Cfiltre*(1-4*k)** |
| Etape 3 | 2*Cfiltre-Cmini | Cmini |
| | 2*Cfiltre-Cmini | Cmini |
| | 2*Cfiltre-Cmini | Cmini |
| Etape 4 | 2*Cfiltre+ ½(Cfrottement-Cmini) | |
| Etape 5 | | - Cfrottement |
| | 2Cfiltre+Cfrottement | |
| | | - Cfrottement |

Sur le tableau 1 sont représentés le couple $C_{1/4}$ délivré par chaque cylindre 1 et 4 (colonne "C1/4") et le couple $C_{2/3}$ délivré par les cylindres 2 et 3 (colonne "C2/3") . Ces couples varient en fonction de l'avancement de la désactivation des cylindres 2 et 3, cet avancement étant représenté par des étapes correspondant à chaque ligne de la colonne "Avancement de la désactivation", une étape i étant représentée comme un intervalle Ei de la figure 8b.

La première étape (étape 1 : $E_1$) de la désactivation des cylindres 2 et 3 correspond à un fonctionnement du moteur en mode à quatre cylindres, le couple $C_{1/4}$ et le couple $C_{2/3}$ étant égaux au couple moyen $C_{filtre}$ par cylindre délivré par le moteur.

Dès que la désactivation des cylindres 2 et 3 est décidée par l'unité centrale (étape 2 : $E_2$), le couple $C_{1/4}$ délivré par chacun des cylindres 1 et 4 augmente linéairement de façon à tendre vers le couple final désiré $2C_{filtre} + C_{frottement}$.

Parallèlement, le couple $C_{2/3}$ délivré par les cylindres 2 et 3 diminue linéairement et tend vers le couple $C_{frottement}$ comme précédemment décrit à l'aide de la figure 8a.

Le nombre d'itérations nécessaires pour que le couple $C_{1/4}$ fourni par les cylindres 1 et 4 atteigne la valeur de $2C_{filtre}-C_{mini}$ et que les cylindres 2 et 3 atteignent le couple $C_{mini}$, est fonction du régime moteur des couples $C_{mini}$, $C_{filtre}$ et de la valeur de k déterminée préalablement. En d'autres termes, le nombre d'itérations n'est pas prévisible.

Lorsque les cylindres 2 et 3 atteignent le couple $C_{mini}$ le couple $C_{2/3}$ ne peut plus être diminué en étant maintenu positif. Au contraire, si le couple $C_{2/3}$ diminue en dessous de cette limite, une énergie mécanique doit être fournie aux cylindres 2 et 3 pour maintenir leur mouvement.

C'est pourquoi, lors d'une troisième étape (étape 3 : $E_3$), on sature les cylindres 1 et 4 au couple $2xC_{filtre}-C_{mini}$ et les cylindres 2 et 3 au couple $C_{mini}$, parallèlement à la transmission d'un signal déclenchant la fermeture des soupapes des cylindres 2 et 3.

La désactivation des cylindres 2 et 3 débute à un instant tel que la désactivation des cylindres soit effectuée de façon à ce que des gaz de combustion soient maintenus dans les cylindres désactivés, c'est-à-dire que l'on tient compte des délais d'exécution de commande des actionneurs électrohydrauliques contrôlant les soupapes d'échappement. Ce temps de réponse des actionneurs, c'est-à-dire des électrovannes, du circuit d'huile et des butées, est déterminé empiriquement. Il dépend du régime et de la pression et/ou de la température d'huile.

Ainsi le nombre de demi-tours du moteur correspondant au temps de réponse est évalué à chaque appel de la fonction du régime et de la pression ou température d'huile. Si ce temps correspond à deux demi-tours du moteur la désactivation débute lors d'un PMH d'un cylindre maintenu actif. Si ce temps correspond, par exemple encore, à 3 demi-tours moteur la commande de l'électrovanne débute lors du PMH d'un cylindre désactivable.

Au cours de la désactivation des cylindres 2 et 3 (étape 4: $E_4$), c'est-à-dire pendant la période correspondant par exemple à deux PMH nécessaires à la fermeture des soupapes d'échappement par les actionneurs électrohydrauliques, les cylindres 1 et 4 fournissent un couple intermédiaire égal à $2C_{filtre}+1/2 (C_{frottement}-C_{mini})$ tandis qu'à la fin de la désactivation (étape 5 : $E_5$), ce couple est maintenu à $2C_{filtre}+C_{frottement}$, le couple fourni par chaque cylindre 2 et 3 étant égal à $-C_{frottement}$.

A cet effet, il est nécessaire que la commande de fermeture des soupapes d'échappement maintenues fermées soit exécutée à partir d'un PMH correspondant à un cylindre maintenu actif (dans le cas où le temps de réponse correspond à deux demi-tours moteur), comme décrit ci-dessous à l'aide de la figure 8c qui représente un schéma relatif à de telles mesures sur lequel on a représenté le délai $\delta t$, proche de deux PMH, qui est nécessaire à l'exécution de la commande de fermeture des soupapes d'échappement par des actionneurs électrohydrauliques, un tel délai ayant été déterminé empiriquement.

Par ailleurs, un délai $\delta t'$ de mise en pression des poussoirs est aussi représenté suivant l'axe chronologique des abscisses.

En considérant ces deux délais $\delta t$ et $\delta t'$ et le fait que des gaz d'échappement doivent être conservés dans les cylindres désactivés, il apparaît que les actionneurs électrohydrauliques doivent être mis sous pression après le début d'une phase d'échappement (Ec) d'un cylindre dans sa dernière phase d'échappement actif et avant le début de la phase d'échappement du cycle suivant.

L'activation des deux cylindres 2 et 3 lors du passage d'un mode à deux cylindres vers un mode à quatre cylindres est décrite ci-dessous à l'aide du tableau 2 et de la figures 8d, une étape i' décrite dans le tableau 2 correspondant à une période E'i de la figure 8d.

TABLEAU 2

| Avancement de la désactivation | C1/4 | C2/3 |
|---|---|---|
| Etape 1 | | - Cfrottement |
| | 2Cfiltre+Cfrottement | |
| | | - Cfrottement |
| | 2Cfiltre+Cfrottement | - Cfrottement |
| Etape 2 | 2*Cfiltre+ ½(Cfrottement-Cmini) | |
| Etape 3 | | Cmni |
| Etape 4 | (2-k)*Cfiltre-Cmini | |
| | | Cmini+2*k*Cfiltre |
| | (2 - 3*k)*Cfiltre-Cmini | |
| | | Cmini+4*k*Cfiltre |
| | ... | ... |
| Etape 5 | Cfiltre | Cfiltre |

Lors d'une première étape (étape 1'), le moteur fonctionne suivant un mode à deux cylindres tel que les cylindres actifs 1 et 4 fournissent un couple $C_{1/4}$ égale à $2 \times C_{filtre}+C_{frottement}$, tandis que les cylindres 2 et 3 fournissent un couple négatif égal à $C_{frottement}$.

Lors d'une deuxième étape (étape 2'), on transmet une commande de réactivation des cylindres 2' et 3'. Cette commande est transmise au dispositif électrohydraulique commandant des soupapes d'échappement des cylindres désactivés si le numéro de cylindre, le temps de réactivation de ces moyens de commande et le régime moteur sont compatibles avec le délai d'exécution de cette commande comme décrit ultérieurement. Autrement, la commande est transmise au point mort haut suivant. Pendant cette phase d'attente, la réactivation effective des échappements n'est pas effectuée.

Au cours de cette phase d'attente, un point mort haut avant la réactivation de l'échappement des cylindres désactivés, le couple commandé aux cylindres 1 et 4 est augmenté jusqu'à une valeur de $2 \times Cfiltre+1/2$ ($C_{frottement}$-$C_{mini}$).

Au point mort haut suivant (étape 3), le couple $C_{2/3}$ transmet un couple $C_{mini}$ qui augmente par la suite (étape 4) de façon à tendre vers $C_{filtre}$ à partir d'itérations analogues à celles précédemment décrites pour la désactivation de cylindres.

L'utilisation d'une unité centrale et d'actionneurs électromécaniques permet de considérer divers modes de fonctionnement du moteur complémentaire au choix d'un mode propre à un nombre de cylindres actifs.

Comme précédemment décrit à l'aide de la figure 2, ces modes complémentaires sont choisis suivant un ordre donné tel que l'on détermine le nombre de cylindres actifs, puis les soupapes actives par cylindre et, finalement, le mode de levée de ces soupapes actives.

On considère par la suite que chaque cylindre est muni de deux soupapes d'admission, ces soupapes étant commandées indépendamment l'une de l'autre par un actionneur électromécanique tel que décrit à la figure 1. Quatre modes d'utilisation de ces soupapes sont prédéterminés pour chaque cylindre lors des phases d'admission :

- Selon un premier mode dit fermé, le cylindre est désactivé et aucune soupape d'admission n'est ouverte.
- Selon un deuxième mode dit impair, seule la soupape d'admission contrôlant l'injection de carburant est ouverte.
- Selon un troisième mode dit pair, seule la soupape d'admission contrôlant une entrée exclusive d'air dans la chambre de combustion est ouverte.
- Dans un quatrième mode dit ouvert, les deux soupapes d'admission sont ouvertes.

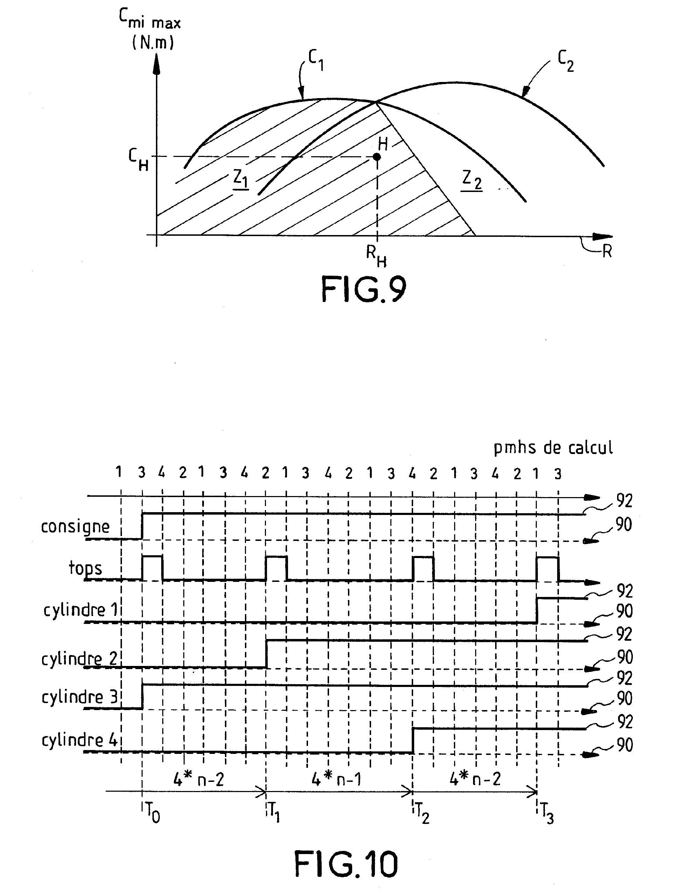

Le mode d'utilisation des soupapes est déterminé, à partir du fonctionnement du moteur, à l'aide d'un diagramme tel que représenté à la figure 9 qui est un diagramme sur lequel le couple (ordonnées) et le régime (abscisses) de ce moteur sont représentés en fonction du nombre de soupapes actives par cylindre. A cet effet, deux courbes $C_1$ et $C_2$ ont été obtenues de façon à délimiter les zones de fonctionnement (couple, régime) accessibles à ce moteur selon qu'une seule soupape d'admission (courbe $C_1$) ou deux soupapes d'admission (courbe $C_2$) sont activées par cylindre.

Comme représenté sur cette figure 9, l'utilisation d'une seule soupape d'admission permet d'obtenir à faible régime un couple plus élevé que l'utilisation de deux soupapes d'admission. Inversement, à fort régime, l'utilisation de deux soupapes d'admission permet de délivrer un couple plus élevé.

On fera donc fonctionner le moteur de préférence avec une seule soupape d'admission lorsque le régime est faible. Inversement, lorsque le régime du moteur est élevé, le fonctionnement du moteur avec deux soupapes d'admission par cylindre est privilégié. Finalement, lorsqu'un cylindre est désactivé, les deux soupapes d'admission doivent être fermées.

Ces considérations sont représentées sur la figure 9 par des zones $Z_1$ ou $Z_2$ telles que, lorsque le moteur fonctionne à un couple C requis et à un régime $R_H$ donné, le mode correspondant à la zone où se situe le point H de coordonnée $(C_H, R_H)$ est préféré.

Toutefois, comme pour les changements de mode de deux à quatre cylindres ou de quatre à deux cylindres, les changements du nombre de soupapes utilisées par cylindre peuvent engendrer des secousses. C'est pourquoi une transition d'un mode à une soupape vers un mode à deux soupapes, ou réciproquement, est appliquée de manière progressive en utilisant quatre étapes décrites ci-dessous :

- Dans une première étape, un premier cylindre se trouvant au point mort haut lors de la commande du changement de mode, par exemple d'un mode à deux soupapes actives vers un mode à une seule soupape, modifie son mode de fonctionnement.
- Après 4n-2 demi-tours du moteur, n étant fixé en fonction du moteur, un second cylindre en opposition de phase par rapport au premier cylindre effectue aussi ce changement de mode lorsqu'il atteint son point mort haut.
- 4n-1 demi-tours du moteur après ce deuxième changement de mode, un troisième cylindre effectue ce changement de mode lors de son point mort haut, et
- 4n-2 demi-tours du moteur après le changement de mode du troisième cylindre, le quatrième cylindre effectue le changement de mode lorsqu'il atteint son point mort haut.

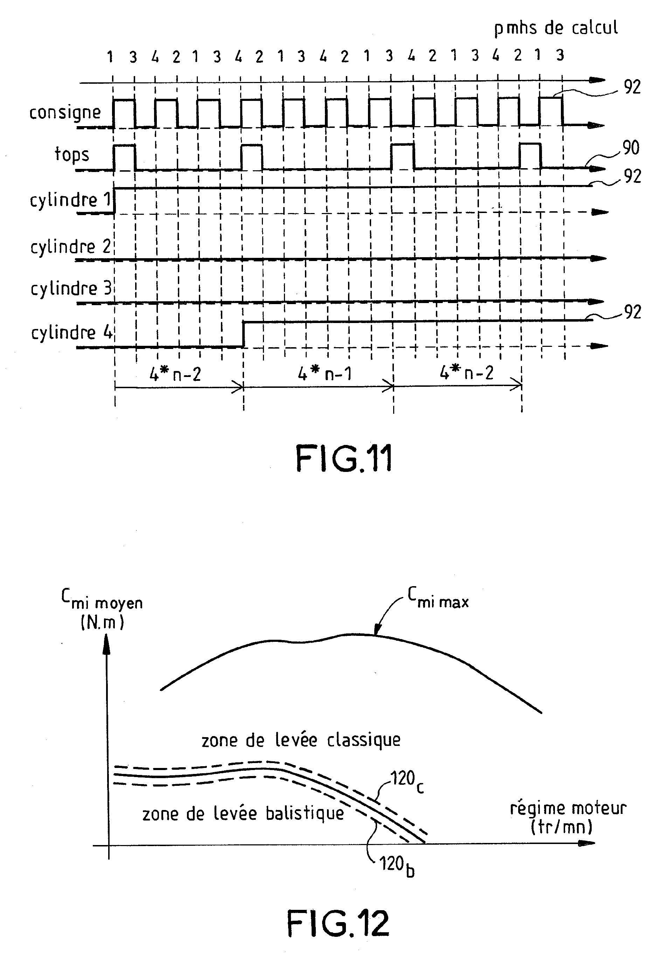

Une telle opération est représentée sur la figure 10 où sont représentés les modes de fonctionnement "consignes" commandés correspondant à un mode 90 avec deux soupapes d'admission ou 92 avec une seule soupape d'admission.

En fonction de ces deux modes de fonctionnement, le mode de fonctionnement de chaque cylindre "cylindre 1", "cylindre 2", "cylindre 3" et "cylindre 4, est représenté.

Par ailleurs, on a représenté les instants "tops" de commande de changement de mode de fonctionnement émis vis-à-vis de chaque cylindre, instants correspondant à des PMH du cylindre commandé.

Ainsi, lorsque la consigne de basculement du moteur d'un mode à 2 soupapes d'admission vers un mode à 1 soupape d'admission est déclenchée à un instant $T_0$, le cylindre 3 se trouvant au point mort haut à cet instant change son mode de fonctionnement à deux soupapes en un mode à une soupape.

Après un délai correspondant à un demi-tour du moteur (dans cette réalisation n = 2) le cylindre en opposition de phase par rapport au cylindre 3 bascule dans le nouveau mode de fonctionnement de consigne. Il s'agit donc du cylindre 2 qui change son mode de fonctionnement à l'instant $T_1$.

Il convient de signaler que lorsqu'un cylindre est désactivé, on peut commander le maintien en position fermée de ses deux soupapes d'admission ou le maintien en position ouverte d'une de ces deux soupapes de façon à conserver un film fluide du carburant.

Par ailleurs, lorsque deux cylindres sont désactivés, les consignes déterminant les modes de nombre de soupapes actives par cylindre varient entre les cylindres actifs et les cylindres désactivés. On évite ainsi de commander des changements de modes à des cylindres dont les soupapes d'admission sont maintenues fermées.

Une telle situation est montrée sur la figure 11, où l'on observe que la consigne pour les cylindres actifs 1 et 4 entraîne l'établissement du mode à une seule soupape d'admission (92) pour un cylindre, tandis que les cylindres 2 et 3 désactivés sont maintenus suivant un mode (90) à deux soupapes d'admission.

Lorsque le nombre de soupapes d'admission utilisées est déterminé, le mode de levée opérée pour ces soupapes d'admission est sélectionné en fonction des paramètres de fonctionnement du moteur, l'ouverture de la soupape s'effectuant selon un mode de levée balistique, ou selon un mode de levée classique.

On rappelle que, suivant un mode de levée classique, les instants d'ouverture et de fermeture des soupapes sont déterminés et commandés, tandis que suivant un mode balistique, l'instant de fermeture d'une soupape n'est pas commandé mais déterminé par le temps nécessaire à celle-ci pour passer d'une position fermée à la position ouverte puis, sans arrêt, revenir à la position fermée.

En d'autres termes, le mode classique utilise un signal d'ouverture et un signal de fermeture de soupape tandis que le mode balistique n'utilise qu'un signal d'ouverture.

Sur la figure 11 est représenté le mode de levée utilisé pour les soupapes actives en fonction des conditions (régime, couple) de fonctionnement du moteur. Il apparaît que le mode de levée balistique est particulièrement favorable lorsque le régime moteur est faible, par exemple lorsque le moteur fonctionne au ralenti.

Toutefois, lorsque le couple devant être délivré par le moteur est important, il est nécessaire que le mode d'ouverture des soupapes d'admission devienne un mode classique.

C'est pourquoi, lorsque le moteur fonctionne selon un mode balistique, le mode de levée classique est imposé immédiatement dès que le moteur fonctionne dans une zone de levée classique étant donné que le mode balistique ne peut pas être utilisé pour des charges moyennes à fortes.

Inversement, le déclenchement d'un mode balistique s'effectue au moyen d'une stratégie identique à celle de la gestion des transitions des modes relatives au nombre de soupapes actives, c'est à dire :

- Dans une première étape, un premier cylindre se trouvant au point mort haut lors de la commande du changement de mode, par exemple d'un mode à deux soupapes actives vers un mode à une seule soupape, modifie son mode de fonctionnement.
- Après 4n-2 demi-tours du moteur, n étant fixé en fonction du moteur, un second cylindre en opposition de phase par rapport au premier cylindre effectue aussi ce changement de mode lorsqu'il atteint son point mort haut.
- 4n-1 demi-tours après ce deuxième changement de mode, un troisième cylindre effectue ce changement de mode lors de son point mort haut, et
- 4n-2 demi-tours après le changement de mode du troisième cylindre, le quatrième cylindre effectue le changement de mode lorsqu'il atteint son point mort haut ;

Toutefois, une nouvelle temporisation sera prise en compte avant la première application du mode déclenché. En effet, si la consigne de couple est oscillante il est préférable d'appliquer une temporisation pour empêcher un passage immédiat du mode classique au mode balistique, c'est-à-dire que le couple de consigne doit présenter une valeur inférieure à un seuil d'hystérisis pendant une durée au moins égale à la temporisation pour passer du mode de levé classique au mode de levé balistique. Ainsi à chaque fois que le couple devient inférieur à une valeur d'hystérisis on déclenche la temporisation.

Par ailleurs, de façon analogue au changement du nombre de cylindres actifs en fonction du régime (figure 4), le changement du mode de levée est fonction d'une plage de stabilité telle que le seuil (courbe 120c) de déclenchement du mode de levée classique est distinct du seuil (courbe 120b) de levée balistique.

**Revendications**

1. Moteur à combustion interne comprenant un processeur (30) et des cylindres dont chacun comporte au moins deux soupapes d'admission commandées au moyen d'actionneurs électromécaniques, **caractérisé en ce que** le processeur comprend des moyens (34) pour recevoir des informations (R, $C_{brut}$, G, T, Q) relatives au fonctionnement du moteur et des informations (C.V.) relatives à la conduite du véhicule, et des moyens (38) pour commander des actionneurs de façon à modifier le nombre et/ou le type de soupapes d'admission actives par cylindre, une soupape désactivée étant maintenue dans une position fermée.

2. Moteur selon la revendication 1, **caractérisé en ce que** le processeur comporte des moyens pour recevoir des informations concernant le moteur qui sont relatives à au moins un des paramètres suivants: le régime du moteur, le couple commandé au moteur, la température du liquide de refroidissement, la composition et/ou la température des gaz d'échappement, l'embrayage d'une vitesse, et/ou la quantité de carburant injectée dans les cylindres.

3. Moteur selon la revendication 1 ou 2 **caractérisé en ce que** le processeur comporte des moyens pour recevoir des informations concernant la conduite du véhicule qui sont relatives à au moins un des paramètres suivants: la vitesse du véhicule, la trajectoire du véhicule, un type de conduite du véhicule.

4. Moteur selon l'une des revendications 1, 2 ou 3 **caractérisé en ce que** le processeur comprend des moyens pour modifier le couple commandé ($C_{brut}$) par le conducteur du véhicule en un couple ($C_{filtre}$) filtré atténuant les variations de ce couple commandé ($C_{brut}$) et pour déterminer le nombre et/ou le type de soupapes d'admission actives par cylindre en fonction de ce couple filtré.

5. Moteur selon la revendication 4 **caractérisé en ce que** le processeur comporte des moyens pour que le changement d'un mode à un autre mode s'effectue lorsque le couple ($C_{filtre}$) filtré atteint un couple de test ($C_{40}"$ (min) , $C_{40}'$(min) $C_{40}"$ (max); $C_{40}'$ (max)) et que la variation ($\Delta C_{brut}$) de couple ($C_{brut}$) commandée est supérieure à un seuil maximal positif ($DC_{max}$; $DC'_{max}$) de variation lorsque la variation est positive, ou inférieure à un seuil minimal négatif de variation ($DC"_{min}$) lorsque la variation est négative.

**6.** Moteur selon l'une des revendications 1 à 5 **caractérisé en ce que**, chaque cylindre comportant au moins une soupape contrôlant une admission d'un mélange d'air et de carburant et au moins une soupape contrôlant une admission d'air, le processeur comporte des moyens pour commander au moins deux des modes suivants: un mode activant toutes les soupapes d'admission, un mode activant uniquement la (ou les) soupape(s) contrôlant une admission de carburant, un mode activant uniquement la (ou les) soupape(s) contrôlant une admission d'air, un mode désactivant toutes les soupapes d'admission.

**7.** Moteur selon l'une des revendications précédentes **caractérisé en ce que** le processeur comporte des moyens pour activer et/ou désactiver, lors d'un changement de mode du nombre et/ou type de soupapes actives par cylindre, les soupapes d'admission de chaque cylindre considéré successivement.

**8.** Moteur selon la revendication 7, comportant deux paires de cylindres fonctionnant suivant un cycle à quatre temps, un premier cylindre d'une paire étant décalé d'un demi cycle vis-à-vis du deuxième cylindre de cette paire, **caractérisé en ce que** le processeur comporte des moyens pour commander successivement un changement de mode du nombre et/ou type de soupapes d'admission actives à un premier cylindre d'une première paire, au deuxième cylindre de cette première paire, à un premier cylindre d'une deuxième paire puis à un deuxième cylindre de la deuxième paire.

**9.** Moteur selon l'une des revendications précédentes **caractérisé en ce que** le processeur comporte des moyens pour déterminer un mode de fonctionnement relatif au mode de levée des soupapes actives.

**10.** Moteur selon la revendication 9 **caractérisé en ce que** le processeur comporte des moyens pour utiliser un mode de levée des soupapes d'admission classique, comportant une commande d'ouverture et une commande de fermeture des soupapes, ou un mode de levée balistique, comportant une unique commande d'ouverture ou de fermeture de la soupape d'admission.

**11.** Moteur selon la revendication 10 **caractérisé en ce que** le processeur comporte des moyens pour commander le mode classique sans transition à partir d'un mode balistique.

**12.** Moteur selon l'une des revendications 10 ou 11 comportant deux paires de cylindres fonctionnant suivant un cycle à quatre temps, un premier cylindre d'une paire étant décalé d'un demi cycle vis-à-vis du deuxième cylindre de cette paire, **caractérisé en ce que** le processeur comporte des moyens pour commander successivement le mode balistique à partir d'un mode classique à des soupapes d'un premier cylindre d'une première paire, à des soupapes du deuxième cylindre de cette première paire, à des soupapes d'un premier cylindre d'une deuxième paire et à des soupapes du deuxième cylindre de la deuxième paire.

# FIG.1

# FIG.2

FIG.3

FIG.4

EP 1 408 202 A2

(N.m)

$C''_{40}(max)$

$C_{40}(max)$

$C'_{40}(max)$

<u>42</u>
(4 cylindres)

$C_{filtre}$

$G_{40}$

$C_{brut}$

$F_1$

<u>40</u>
(2 cylindres)

$C''_{40}(min)$

$C_{40}(min)$

$G_{40}$

$C'_{40}(min)$

<u>42</u>

# FIG.5

# FIG.6a

# FIG.6b

66

Attente calcul suivant

Autorisation de changement de mode

54 — Test $C_{40}$ (max)

faux

faux

vrai — $E\_commut = 1$

vrai

56 — E_commut = 0 ?

68 — $C_{brut} > C_{40}$ (min)

vrai

70 — $C_{brut} > C_{40}$ (max)

72 — E_commut = 0

faux

faux

vrai — E_commut = 1

74

76 — $\Delta C_{brut} > DC'_{max}$

faux

77 — $\Delta C_{brut} < DC'_{min}$

vrai — 78 — E_commut = 0

faux

79 — E_commut = E_commut + δ

# FIG.6c

FIG.7a

FIG. 7b

FIG.7c

FIG.7d

FIG.8a

EP 1 408 202 A2

FIG.8b

FIG.8c

FIG.8d

FIG.9

FIG.10

FIG.11

FIG.12